# EUROPEAN PATENT APPLICATION

(11) **EP 4 645 124 A1**
(43) Date of publication of application: **05.11.2025**
(21) Application number: 25173786.2
(22) Date of filing: 30.04.2025
(51) Int. Cl.: G06F 21/10, G06F 21/60, H04L 9/40, H04W 12/10, H04W 48/12, H04W 84/12

(54) **COMMUNICATIONS SYSTEMS WITH CONTROL FRAME PROTECTION**

(30) Priority: 01.05.2024 US 202463641000 P; 16.04.2025 US 202519181014
(71) Applicant: Apple Inc., Cupertino, CA 95014 (US)
(72) Inventor: SEOK, Yong Ho, Cupertino, California, 95014 (US); KNECKT, Jarkko L., Cupertino, California, 95014 (US); SUN, Yanjun, Cupertino, California, 95014 (US); BATRA, Anuj, Cupertino, California, 95014 (US); LIU, Yong, Cupertino, California, 95014 (US); YONG, Su Khiong, Cupertino, California, 95014 (US)
(74) Representative: Simmons & Simmons

(57) **Abstract**

A communication system is provided in which access points (APs) communicate with stations (STAs). An AP may communicate with a STA according to a multiple basic service set identifier (M-BSSID) scheme. The AP may transmit an initial control frame (ICF) to STAs associated with different BSSIDs of the AP. The AP may integrity protect the ICF by generating one or more control message integrity checks (CMICs) and inserting the CMIC(s) into the ICF. The AP may generate a common CMIC shared across BSSIDs using a control frame integrity group temporal key (CIGTK) that is BSSID-specific or BSSID-independent. A BSSID-independent CIGTK may be a newly defined or may be a beacon integrity group temporal key (BIGTK). As another example, the AP may generate different CMICs in the ICF for each BSSID using different BSSID-specific CIGTKs for each BSSID.

## Description

This application claims priority to U.S. Patent Application No. 19/181,014, filed April 16, 2025, and U.S. Provisional Patent Application No. 63/641,000, filed May 1, 2024, which are hereby incorporated by reference herein in their entireties.

### Field

This disclosure relates generally to wireless communications, including wireless communications by electronic devices.

### Background

Communications systems and methods are used to convey wireless data between nodes of a communications network. The nodes can include user equipment devices, wireless access points, wireless base stations, or other electronic devices.

It can be challenging to ensure that communications systems exhibit sufficient levels of performance. If care is not taken, communication between nodes of a communications network can exhibit excessive latency, can consume excessive resources, or can exhibit insufficient levels of data security.

### Summary

A communication system is provided in which access points (APs) communicate with stations (STAs). An AP may communicate with STAs according to a communications protocol that implements a multiple basic service set identifier (M-BSSID) scheme. The AP may transmit an initial control frame (ICF) to STAs associated with different basic service set identifiers (BSSIDs) maintained by the AP. The BSSIDs may include a transmitted BSSID that is used for common management signaling and may include non-transmitted BSSIDs for each virtual network.

The AP may protect the ICF by generating one or more control message integrity checks (CMICs) and inserting the CMIC(s) into the ICF. As one example, the AP may generate a common CMIC that is shared across BSSIDs using a control frame integrity group temporal key (CIGTK). The CIGTK may be a BSSID-specific CIGTK of the transmitted BSSID or may be a BSSID-independent CIGTK that is shared across BSSIDs. The BSSID-independent CIGTK may be a newly defined CIGTK or may be a beacon integrity group temporal key (BIGTK). As another example, the AP may generate different CMICs in the ICF for each BSSID using different BSSID-specific CIGTKs for each BSSID. The AP and STAs may perform secure communications under the M-BSSID scheme while minimizing latency and maximizing data throughput.

An aspect of the disclosure provides a method of operating a station (STA) to communicate with an access point (AP). The method can include receiving, from the AP, a control frame that includes a control message integrity check (CMIC) shared by a plurality of basic service set identifiers (BSSIDs) of the AP. The method can include attempting to verify, using one or more processors, the CMIC in the control frame. The method can include transmitting, using one or more antennas, an uplink signal to the AP responsive to verifying the CMIC in the control frame.

An aspect of the disclosure provides an electronic device configured to communicate with an access point (AP). The electronic device can include a receiver configured to receive, from the AP, a control frame that includes a first control message integrity check (CMIC) for a first basic service set identifier (BSSID) of the AP and that includes a second CMIC for a second BSSID of the AP, the electronic device being associated with the first BSSID but not the second BSSID. The electronic device can include one or more processors configured to attempt to verify the first CMIC in the control frame. The electronic device can include a transmitter configured to transmit an uplink signal to the AP responsive to verifying the first CMIC in the control frame.

An aspect of the disclosure provides a method of operating an access point (AP) according to a communications protocol that implements a multiple basic service set identifier (M-BSSID) scheme. The method can include generating, using one or more processors, a control message integrity check (CMIC) based on a cryptographic key. The method can include transmitting, using one or more antennas, a control frame to a first station (STA) associated with a first basic service set identifier (BSSID) of the AP and to a second STA associated with a second BSSID of the AP that is different from the first BSSID. A header of the control frame can include the CMIC and a transmitter address (TA). The TA can identify a third BSSID that is different from the first BSSID and the second BSSID.

### Brief Description of the Drawings

FIG. 1 is a diagram of an illustrative wireless communications system in with some embodiments.
FIG. 2 is a schematic diagram of an illustrative wireless station (STA) in accordance with some embodiments.
FIG. 3 is a schematic diagram of an illustrative wireless access point (AP) in accordance with some embodiments.
FIG. 4 is a timing diagram showing one example of how an AP and multiple STAs may perform downlink communications under a multiple basic service set identifier (M-BSSID) scheme in accordance with some embodiments.
FIG. 5 is a timing diagram showing one example of how an AP and multiple STAs may perform uplink communications under a M-BSSID scheme in accordance with some embodiments.
FIG. 6 is a diagram showing how an illustrative transmitter device may perform integrity protection on a transmitted control frame in accordance with some embodiments.
FIG. 7 is a diagram showing how an illustrative receiver device may integrity check an integrity-protected control frame received from a transmitting device in accordance with some embodiments.
FIG. 8 is a timing diagram showing one example of integrity-protected communications between an AP and STAs of the same basic service set identifier (BSSID) in accordance with some embodiments.
FIG. 9 is a timing diagram showing an example of how an AP may integrity protect an initial control frame (ICF) using different respective control message integrity checks (CMICs) for STAs associated with different BSSIDs in accordance with some embodiments.
FIG. 10 is a timing diagram showing an example of how an AP may integrity protect an ICF using a common CMIC for STAs associated with different BSSIDs in accordance with some embodiments.
FIG. 11 is a diagram of illustrative group key tables stored on an AP and a STA in an example where the AP uses a BSSID-specific control frame integrity group temporal key (CIGTK) to generate a common CMIC for an integrity-protected ICF in accordance with some embodiments.
FIG. 12 is a diagram of illustrative group key tables stored on an AP and a STA in an example where the AP uses a dedicated CIGTK shared across BSSIDs to generate a shared CMIC for an integrity-protected ICF in accordance with some embodiments.
FIG. 13 is a diagram of illustrative group key tables stored on an AP and a STA in an example where the AP re-uses a beacon integrity group temporal key (BIGTK) to generate a shared CMIC for an integrity-protected ICF in accordance with some embodiments.
FIG. 14 is a diagram of illustrative group key tables stored on an AP and a STA in an example where separate CIGTKs for different BSSIDs are omitted and where the AP uses a dedicated CIGTK shared across BSSIDs to generate a shared CMIC for an integrity-protected ICF in accordance with some embodiments.
FIG. 15 is a diagram of illustrative group key tables stored on an AP and different sets of STAs in an example where the AP uses a dedicated CIGTK shared across BSSIDs to generate a shared CMIC for an integrity-protected ICF and in which one of the sets of STAs belongs to an opportunistic wireless encryption (OWE) network in accordance with some embodiments.
FIG. 16 is a flow chart of illustrative operations involved in performing wireless communications between an AP configured to communicate under a M-BSSID scheme and a STA associated with a non-transmitted BSSID of the AP in accordance with some embodiments.
FIG. 17 is a timing diagram showing an illustrative handshake procedure that may be performed between a STA and an AP in accordance with some embodiments.
FIG. 18 is a diagram showing one example of how an AP may include information identifying cryptographic group keys in a handshake message with an AP in accordance with some embodiments.
FIG. 19 is a timing diagram showing one example of how an AP may include information identifying a selected cryptographic group key to be used by a STA to integrity check an integrity-protected ICF transmitted by the AP in accordance with some embodiments.

### Detailed Description

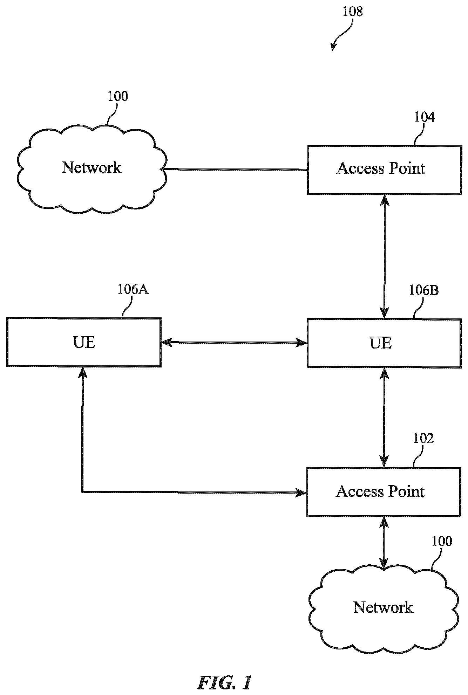

FIG. 1 illustrates an example of a wireless communication system 108 (sometimes also referred to herein as wireless communications network 108, communications network 108, network 108, or system 108). It is noted that FIG. 1 represents one possibility among many, and that features of the present disclosure may be implemented in any of various systems, as desired. For example, embodiments described herein may be implemented in any type of wireless device. The wireless embodiment described below is one example embodiment.

As shown in FIG. 1, the exemplary wireless communication system 108 includes an access point (AP) 104, which communicates over a transmission medium with one or more wireless devices 106 (e.g., a first wireless device 106A, a second wireless device 106B, etc.). Wireless devices 106A and 106B may be user devices (e.g., user equipment (UE) devices), such as stations (STAs), non-AP STAs, or wireless local area network (WLAN) devices. Wireless devices 106 are sometimes referred to herein as STAs 106 or clients 106.

STA 106 may be a device with wireless network connectivity such as a mobile (e.g., cellular) telephone, a hand-held device, a wearable device (e.g., a wristwatch device, pendant device, ring device, head-mounted device such as a virtual, mixed, and/or augmented reality headset, goggles, helmet, or glasses, etc.), a computer (e.g., a desktop computer, laptop computer, a computer monitor containing an embedded computer, etc.), a tablet computer, a media player, headphones, one or two wireless earbuds, a television, a gaming device or console, a navigation device, an embedded system such as a system in which electronic equipment with a display is mounted in a kiosk or automobile, a wireless internet-connected voice-controlled speaker, a home entertainment device, a remote control device, a gaming controller, a user input device, peripheral, or accessory, an electronic stylus or pen, an unmanned aerial vehicle (UAV), an unmanned aerial controller (UAC), an automobile, computing equipment integrated into a vehicle or kiosk, equipment that implements the functionality of two or more of these devices, or virtually any type of wireless device.

STA 106 may include a processor (processing element) that is configured to execute program instructions stored in memory. STA 106 may perform any of the method embodiments described herein by executing such stored instructions. Alternatively, or in addition, STA 106 may include a programmable hardware element such as an FPGA (field-programmable gate array), an integrated circuit, and/or any of various other possible hardware components that are configured to perform (e.g., individually or in combination) any of the method embodiments described herein, or any portion of any of the method embodiments described herein.

Wireless communications system 108 may include one or more wireless access points (APs) such as AP 102. AP 102 may be a stand-alone AP or an enterprise AP and may include hardware that enables wireless communication with STAs 106 such as STA 106A and STA 106B. AP 102 may also be equipped to communicate with a network 100 (e.g., a WLAN, an enterprise network, and/or another communication network connected to the Internet, among various possibilities). Thus, AP 102 may facilitate communication among STAs 106 and/or between STAs 106 and network 100. AP 102 can be configured to provide communications over one or more wireless technologies, such as any of 802.11 a, b, g, n, ac, ad, ax, ay, be, bn, and/or other 802.11 versions, or a cellular protocol, such as 5G or LTE, including in an unlicensed band (LAA).

Network 100 may include any desired number of network nodes, terminals, and/or end hosts that are communicably coupled together using communications paths that include wired and/or wireless links. The wired links may include cables (e.g., ethernet cables, optical fibers or other optical cables that convey signals using light, telephone cables, radio-frequency cables such as coaxial cables or other transmission lines, etc.). The wireless links may include short range wireless communications links that operate over a range of inches, feet, or tens of feet, medium range wireless communications links that operate over a range of hundreds of feet, thousands of feet, miles, or tens of miles, and/or long range wireless communications links that operate over a range of hundreds or thousands of miles.

The nodes of network 100 may be organized into one or more relay networks, mesh networks, local area networks (LANs), wireless local area networks (WLANs), ring networks (e.g., optical rings), cloud networks, virtual/logical networks, the Internet (e.g., may be communicably coupled to each other over the Internet), combinations of these, and/or using any other desired network topologies. The network nodes, terminals, and/or end hosts of network 100 may include network switches, network routers, optical add-drop multiplexers, other multiplexers, repeaters, modems, portals, gateways, servers, network cards (line cards), wireless access points, wireless base stations, and/or any other desired network components. The network nodes in network 100 may include physical components such as electronic devices, servers, computers, network racks, line cards, user equipment, etc., and/or may include virtual components that are logically defined in software and that are distributed across (over) two or more underlying physical devices (e.g., in a cloud network configuration).

The communication area (or coverage area) of AP 102 (or AP 104) may be referred to as a basic service area (BSA) or cell. AP 102 (or AP 104) and STAs 106 may be configured to communicate over the transmission medium using any of various radio access technologies (RATs) or wireless communication technologies, such as Wi-Fi, LTE, LTE-Advanced (LTE-A), 5G NR, ultra-wideband (UWB), etc. A given RAT may, for example, specify the physical methodology used in implementing a corresponding communications protocol (e.g., a WLAN protocol, a wireless personal area network (WPAN) protocol, a cellular telephone protocol such as a 3G protocol, a 4G (LTE) protocol, a 5G (NR) protocol, etc., a UWB protocol, a satellite communications protocol, a satellite navigation protocol, a device-to-device (D2D) protocol, etc.).

AP 102, AP 104, and other similar access points (not shown) operating according to one or more wireless communication technologies may thus be provided as a network, which may provide continuous or nearly continuous overlapping service to STAs 106A and 106B and similar devices over a geographic area (e.g., via one or more communication technologies). A STA may roam from one AP to another AP directly or may transition between APs and cellular network cells, for example.

Note that at least in some instances STA 106 may be capable of communicating using any of multiple wireless communication technologies. For example, STA 106 might be configured to communicate using one or more of Wi-Fi, LTE, LTE-A, 5G NR, Bluetooth, UWB, one or more satellite systems, etc. Other combinations of wireless communication technologies (including more than two wireless communication technologies) are also possible. Likewise, in some instances STA 106 can be configured to communicate using only a single wireless communication technology.

As shown in FIG. 1, the exemplary wireless communication system 108 can also include an AP 104, which communicates over a transmission medium with the wireless device 106B. AP 104 also provides communicative connectivity to network 100. Thus, according to some embodiments, wireless devices may be able to connect to either or both of AP 102 (or a cellular base station (BS)) and AP 104 (or another access point) to access the network 100. For example, a STA may roam from AP 102 to AP 104 based on one or more factors, such as coverage, interference, and capabilities. Note that it may also be possible for AP 104 to provide access to a different network (e.g., an enterprise Wi-Fi network, a home Wi-Fi network, etc.) than the network to which the AP 102 provides access.

In some implementations, STAs 106 (e.g., STAs 106A and 106B) may include handheld devices such as smart phones or tablets, wearable devices such as smart watches or smart glasses, and/or may include any of various types of devices with wireless communication capability. For example, one or more of the STAs 106A and/or 106B may be a wireless device intended for stationary or nomadic deployment such as an appliance, measurement device, control device, etc.

STA 106B may also be configured to communicate with STA 106A. For example, STA 106A and STA 106B may be capable of performing direct device-to-device (D2D) communication. In some embodiments, such direct communication between STAs may also or alternatively be referred to as peer-to-peer (P2P) communication. The direct communication may be supported by AP 102 (e.g., AP 102 may facilitate discovery, among various possible forms of assistance), or may be performed in a manner unsupported by the AP 102. Such P2P communication may be performed using 3GPP-based D2D communication techniques, Wi-Fi-based P2P communication techniques, UWB, Bluetooth (BT), and/or any of various other direct communication techniques, according to various embodiments.

STA 106 may include one or more devices or integrated circuits for facilitating wireless communication, potentially including a WLAN (e.g., Wi-Fi) modem, a cellular modem, and/or one or more other wireless modems. The wireless modem(s) may include one or more processors (processor elements) and various hardware components as described herein. STA 106 may perform any of (or any portion of) the method embodiments described herein by executing instructions on one or more programmable processors. Alternatively, or in addition, the one or more processors may be one or more programmable hardware elements such as an FPGA (field-programmable gate array), or other circuitry, that is configured to perform any of the method embodiments described herein, or any portion of any of the method embodiments described herein. The wireless modem(s) described herein may be used in a STA as defined herein, a wireless device as defined herein, or a communication device as defined herein. The wireless modem described herein may also be used in an AP, a base station, a pico cell, a femto cell, or other similar network side device.

STA 106 may include one or more antennas for communicating using one or more wireless communication protocols or radio access technologies. In some embodiments, STA 106 can be configured to communicate using a single shared radio. The shared radio may couple to a single antenna, or may couple to multiple antennas (e.g., for multiple-input-and-multiple-output (MIMO)) for performing wireless communications. Alternatively, STA 106 may include two or more radios, each of which may be configured to communicate via a respective wireless link. Other configurations are also possible.

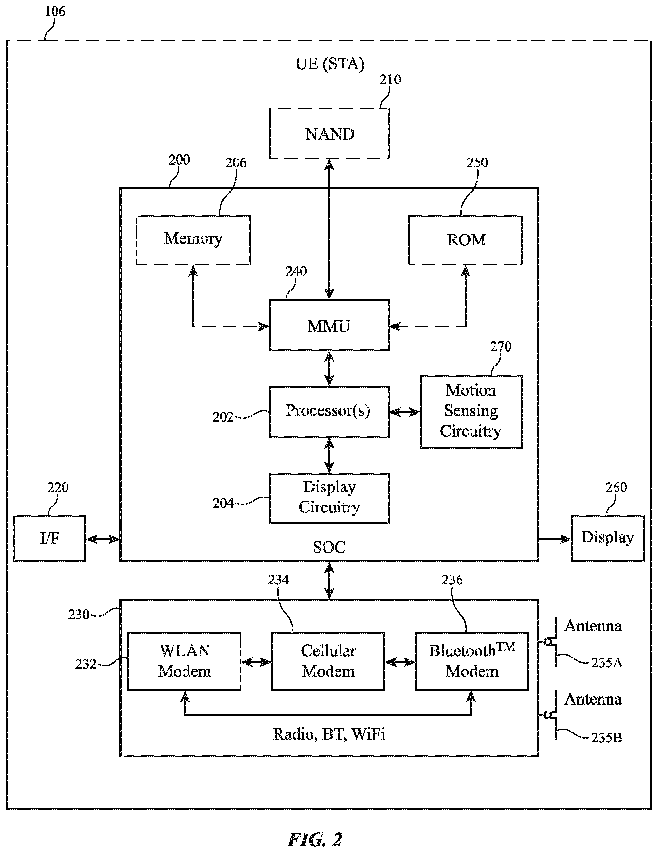

FIG. 2 is one possible block diagram of a STA device such as STA 106. STA 106 is sometimes also referred to herein as UE 106, UE device 106, device 106, electronic device 106, or client 106. STA 106 also may be referred to herein as non-AP STA 106, non-AP device 106, or non-AP client 106. As shown in FIG. 2, STA 106 may include wireless circuitry such as wireless communication circuitry 230, a subsystem such as system on chip (SOC) 200, a display such as display 260, and one or more interfaces such as connector interface (I/F) 220.

SOC 200 may include one or more portions configured for various purposes. For example, as shown in FIG. 2, SOC 200 may include one or more processors 202 and display circuitry 204. Processor(s) 202 may execute program instructions for STA 106. Display circuitry 204 may perform graphics processing and may provide display signals to display 260. Display 260 may be a touch-sensitive display, a force sensitive display, or a display without touch or force sensitivity. Display 260 may include one or more arrays of display pixels that emit light containing images, for example.

SOC 200 may also include sensor circuitry such as motion sensing circuitry 270. Motion sensing circuitry 270 may detect motion of the STA 106 using, for example, a gyroscope, accelerometer, inertial measurement unit (IMU), compass, and/or any of various other motion sensing components. Processor(s) 202 may also be coupled to memory management unit (MMU) 240, which may be configured to receive addresses from processor(s) 202 and may translate those addresses to locations in memory or other storage circuitry (e.g., memory 206, read only memory (ROM) 250, flash (NAND) memory 210, etc.). MMU 240 may be configured to perform memory protection and page table translation or set up. In some embodiments, MMU 240 may be included as a portion of processor(s) 202.

SOC 200 may be coupled to various other circuits in STA 106. For example, SOC 200 may be coupled to various types of memory (e.g., flash memory 210), connector interface 220 (e.g., for coupling to a computer system, dock, charging station, etc.), display 260, and wireless communication circuitry 230 (e.g., for performing wireless communications under LTE, LTE-A, 5G NR, Bluetooth, Wi-Fi, NFC, GPS, UWB, etc.).

STA 106 may include at least one antenna 235. If desired, STA 106 may include multiple antennas 235 such as at least a first antenna 235A and a second antenna 235B. STA 106 may use antennas 235 to perform wireless communication with access points, base stations, and/or other devices. For example, STA 106 may use antennas 235A and 235B to perform the wireless communication with APs 102 and/or 104 of FIG. 1. As noted above, STA 106 may, in some embodiments, be configured to communicate wirelessly using multiple wireless communication standards or radio access technologies (RATs).

Wireless communication circuitry 230 may include one or more modems such as WLAN (e.g., Wi-Fi) modem 232, cellular modem 234, and Bluetooth modem 236. If desired, wireless communication circuitry 230 may include additional modems for handling other RATs or wireless communications technologies. STA 106 may use WLAN modem 232 (sometimes also referred to herein as Wi-Fi modem 232) to perform Wi-Fi or other WLAN communications (e.g., on an 802.11 network) with one or more external devices (e.g., AP 104 and/or 102 of FIG. 1). STA 106 may use Bluetooth modem 236 to perform Bluetooth communications or other WPAN communications with one or more external devices (e.g., another STA 106). STA 106 may use cellular modem 234 to perform cellular communications with one or more wireless base stations according to one or more cellular communication technologies (e.g., in accordance with one or more 3GPP specifications).

As described herein, STA 106 may include hardware and software components for implementing embodiments of this disclosure. For example, one or more components of the wireless communication circuitry 230 (e.g., Wi-Fi modem 232, cellular modem 234, BT modem 236) of the STA 106 may be configured to implement part or all of the methods described herein, e.g., by one or more processors executing program instructions stored on a memory medium (e.g., a non-transitory computer-readable memory medium), a processor configured as an FPGA (Field Programmable Gate Array), and/or using dedicated hardware components, which may include an ASIC (Application Specific Integrated Circuit). STA 106 may include support structures such as a housing. The housing may include conductive and/or dielectric housing walls, layers, and/or other structures.

If desired, STA 106 may include additional include input-output devices (not shown for the sake of clarity). The input-output devices may be used to allow data to be supplied to STA 106 and to allow data to be provided from STA 106 to external devices. The input-output devices may include user interface devices, data port devices (e.g., interface 220), touch sensors, displays (e.g., display 260), light-emitting components such as displays without touch sensor capabilities, buttons (mechanical, capacitive, optical, etc.), scrolling wheels, touch pads, key pads, keyboards, microphones, cameras, buttons, speakers, status indicators, audio jacks and other audio port components, digital data port devices, motion sensors (accelerometers, gyroscopes, and/or compasses that detect motion), capacitance sensors, proximity sensors, magnetic sensors, force sensors (e.g., force sensors coupled to a display to detect pressure applied to the display), temperature sensors, etc. In some configurations, keyboards, headphones, displays, pointing devices such as trackpads, mice, and joysticks, and other input-output devices may be coupled to STA 106 using wired or wireless connections (e.g., some of the input-output devices may be peripherals that are coupled to a main processing unit or other portion of STA 106 via a wired or wireless link).

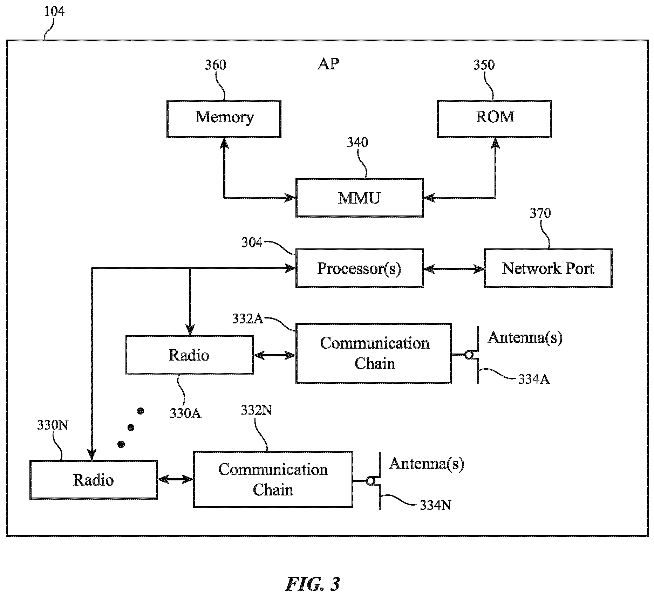

FIG. 3 is an example block diagram of an electronic device such as AP 104 (or equivalently AP 102 of FIG. 1). In some instances (e.g., in an 802.11 communication context), AP 104 may also be referred to as an AP STA. It is noted that the AP of FIG. 3 is merely one example of a possible access point. As shown, AP 104 may include one or more processors 304, which may execute program instructions for AP 104. Processor(s) 304 may also be coupled to MMU 340, which may be configured to receive addresses from processor(s) 304 and to translate those addresses to locations in memory (e.g., memory 360 and ROM 350) or to other storage circuitry, circuits, or devices.

AP 104 may include at least one network port 370. Network port 370 may be configured to couple to a network and to provide multiple devices, such as STAs 106, with access to the network (e.g., network 100 of FIG. 1). Network port 370 (or an additional network port) may also or alternatively be configured to couple to a cellular network (e.g., a core network (CN) of a cellular service provider). The core network may provide mobility related services and/or other services to a plurality of UE devices (e.g., STAs 106). In some cases, network port 370 may couple to a telephone network via the core network, and/or the core network may provide a telephone network (e.g., among other UE devices serviced by the cellular service provider).

AP 104 may include one or more radios 330A-330N, each of which may be coupled to a respective communication chain 332 and at least one antenna 334, and possibly multiple antennas (e.g., a first radio 330A coupled to antenna 334A via communication chain 332A, an Nth radio 330N coupled to antenna 334N via communication chain 332N, etc.). Radios 330 may be configured to operate as wireless transceivers that communicate with STAs 106 via communication chains 332 and antennas 334. Antenna(s) 334A-N communicate with their respective radios 330A-N via communication chains 332A-N. Communication chains 332 may be receive chains, may be transmit chains, or may include both transmit and receive chains. Radios 330A-N may be configured to communicate in accordance with various wireless communication standards including, but not limited to, LTE, LTE-A, 5G NR, 6G, UWB, WLAN (Wi-Fi), WPAN (BT), etc. If desired, AP 104 may be configured to operate on multiple wireless links using the one or more radios 330A-N, where each radio is used to operate on a respective wireless link.

AP 104 may be configured to communicate wirelessly using one or multiple wireless communication standards. In some instances, AP 104 may include multiple radios, which may enable the network entity to communicate according to multiple wireless communication technologies. For example, as one possibility, AP 104 may include an LTE or 5G NR radio for performing communication according to LTE or 5G as well as a Wi-Fi radio for performing communication according to Wi-Fi. In such a case, AP 104 may be capable of operating as both a cellular base station and a Wi-Fi access point. As another possibility, AP 104 may include a multi-mode radio, which is capable of performing communications according to any of multiple wireless communication technologies (e.g., NR and Wi-Fi, NR and LTE, etc.). As still another possibility, AP 104 may be configured to act exclusively as a Wi-Fi access point, e.g., without cellular communication capability.

As described further herein, AP 104 may include hardware and software components for implementing or supporting implementation of features described herein. Processor(s) 304 of AP 104 may be configured to implement, or support implementation of, part or all of the methods described herein, e.g., by executing program instructions stored on a memory medium (e.g., a non-transitory computer-readable memory medium) to operate multiple wireless links using multiple respective radios. Alternatively, processor(s) 304 may be configured as a programmable hardware element, such as an FPGA (Field Programmable Gate Array) or ASIC (Application Specific Integrated Circuit), or a combination thereof. Alternatively (or in addition) the processor(s) 304 of AP 104, in conjunction with one or more of the other components 330, 332, 334, 340, 350, 360, 370 may be configured to implement, or support implementation of, part or all of the features described herein.

Radio(s) 330 on AP 104 may use antenna(s) 334 (FIG. 3) and wireless communication circuitry 230 on STA 106 may use antenna(s) 235 (FIG. 2) to transmit and/or receive radio-frequency signals within different frequency bands at radio frequencies (sometimes referred to herein as communications bands or simply as a "bands"). The frequency bands handled by AP 104 and STA 106 may include satellite communications bands (e.g., the C band, S band, L band, X band, W band, V band, K band, Kₐ band, Kᵤ band, etc.), wireless local area network (WLAN) frequency bands (e.g., Wi-Fi^{®} (IEEE 802.11) or other WLAN communications bands) such as a 2.4 GHz WLAN band (e.g., from 2400 to 2480 MHz), a 5 GHz WLAN band (e.g., from 5180 to 5825 MHz), a Wi-Fi^{®} 6E band (e.g., from 5925-7125 MHz), and/or other Wi-Fi^{®} bands (e.g., from 1875-5160 MHz), wireless personal area network (WPAN) frequency bands such as the 2.4 GHz Bluetooth^{®} band or other WPAN communications bands, cellular telephone frequency bands (e.g., bands from about 600 MHz to about 5 GHz, 3G bands, 4G LTE bands, 5G New Radio Frequency Range 1 (FR1) bands below 10 GHz, 5G New Radio Frequency Range 2 (FR2) bands between 20 and 60 GHz, 6G bands, etc.), other centimeter or millimeter wave frequency bands between 10-300 GHz, near-field communications (NFC) frequency bands (e.g., at 13.56 MHz), satellite navigation frequency bands (e.g., a GPS band from 1565 to 1610 MHz, a Global Navigation Satellite System (GLONASS) band, a BeiDou Navigation Satellite System (BDS) band, etc.), ultra-wideband (UWB) frequency bands that operate under the IEEE 802.15.4 protocol and/or other ultra-wideband communications protocols, communications bands under the family of 3GPP wireless communications standards, communications bands under the IEEE 802.XX family of standards, and/or any other desired frequency bands of interest.

Antenna(s) 334 (FIG. 3) and antenna(s) 235 (FIG. 2) may be formed using any desired antenna structures. For example, the antennas may include antennas with resonating elements that are formed from loop antenna structures, patch antenna structures, inverted-F antenna structures, slot antenna structures, planar inverted-F antenna structures, helical antenna structures, monopole antennas, dipoles, hybrids of these designs, etc. If desired, one or more antennas may include antenna resonating elements formed from conductive portions of a device housing (e.g., peripheral conductive housing structures extending around a periphery of a display on STA 106). Filter circuitry, switching circuitry, impedance matching circuitry, and/or other antenna tuning components may be adjusted to adjust the frequency response and wireless performance of the antennas over time. If desired, multiple antennas may be implemented as a phased array antenna (e.g., where each antenna forms a radiator or antenna element of the phased array antenna, which is sometimes also referred to as a phased antenna array). In these scenarios, the phased array antenna may convey radio-frequency signals within a signal beam. The phases and/or magnitudes of each radiator in the phased array antenna may be adjusted so the radio-frequency signals for each radiator constructively and destructively interfere to steer or orient the signal beam in a particular pointing direction (e.g., a direction of peak signal gain). The signal beam may be adjusted or steered over time.

Wireless communication circuitry 230 may convey radio-frequency signals using antenna(s) 235 (FIG. 2). Radio(s) 330 may convey radio-frequency signals using antenna(s) 334 (FIG. 3). The term "convey radio-frequency signals" as used herein means the transmission and/or reception of the radio-frequency signals (e.g., for performing unidirectional and/or bidirectional wireless communications with external wireless communications equipment). The term "convey wireless data" as used herein means the transmission and/or reception of the wireless data (e.g., as carried by corresponding radio-frequency signals). Antennas may transmit radio-frequency signals by radiating the radio-frequency signals into free space (or to free space through intervening device structures such as a dielectric cover layer). Antennas may additionally or alternatively receive radio-frequency signals from free space (or through intervening devices structures such as a dielectric cover layer). The transmission and reception of radio-frequency signals by antennas each involve the excitation or resonance of antenna currents on an antenna resonating element in the antenna by the radio-frequency signals within the frequency band(s) of operation of the antenna.

Wireless communication circuitry 230 may be coupled to antenna(s) 235 (FIG. 2) over one or more radio-frequency transmission lines. Radio(s) 330 may be coupled to antenna(s) 334 (FIG. 3) over one or more radio-frequency transmission lines. Communication chain(s) 332 (FIG. 3) may be disposed on the radio-frequency transmission lines between antenna(s) 334 and radio(s) 330. The radio-frequency transmission lines may include coaxial cables, microstrip transmission lines, stripline transmission lines, edge-coupled microstrip transmission lines, edge-coupled stripline transmission lines, transmission lines formed from combinations of transmission lines of these types, etc. The radio-frequency transmission lines may be integrated into rigid and/or flexible printed circuit boards if desired. One or more of the radio-frequency lines may be shared between radios or modems if desired. Radio-frequency front end (RFFE) modules may be interposed on one or more of the radio-frequency transmission lines if desired (e.g., within communication chain(s) 332 of FIG. 3 or within wireless communication circuitry 230 of FIG. 2). The radio-frequency front end modules may include substrates, integrated circuits, chips, or packages that are separate from the radios or modems and may include filter circuitry, switching circuitry, amplifier circuitry, impedance matching circuitry, radio-frequency coupler circuitry, and/or any other desired radio-frequency circuitry for operating on the radio-frequency signals conveyed over the radio-frequency transmission lines.

Processor(s) 202 (FIG. 2) and processor(s) 304 (FIG. 3) may each include one or more processors such as microprocessors, microcontrollers, digital signal processors, host processors, baseband processing circuitry (e.g., one or more baseband processors or baseband processor integrated circuits), application specific integrated circuits (ASICs), FPGAs, central processing units (CPUs), graphics processing units (GPUs), etc. If desired, radio(s) 330 (FIG. 3) and/or wireless communication circuitry 230 may also include one or more processors. Baseband circuitry in STA 106 and/or AP 104 may, for example, access a communication protocol stack on corresponding storage circuitry (e.g., memory 206 of FIG. 2 or memory 360 of FIG. 3) to: perform user plane functions at a physical (PHY) layer, data link or media access control (MAC) layer, RLC layer, PDCP layer, SDAP layer, and/or PDU layer, and/or to perform control plane functions at the PHY layer, MAC layer, RLC layer, PDCP layer, RRC, layer, and/or non-access stratum layer.

AP 104 (or AP 102 of FIG. 1) may communicate with a STA 106 over a corresponding wireless communication link. Radio-frequency signals may be wirelessly conveyed between the radios and antennas on AP 104 and STA 106 to support the wireless communication link. The radio-frequency signals may include wireless data modulated onto one or more carriers of the radio-frequency signal (e.g., by a transmitter in radio 330 of AP 104 or a transmitter in a modem on wireless communication circuitry 230 of STA 106). The wireless data may be organized, modulated onto the radio-frequency signals, and demodulated from the radio-frequency signals (e.g., by a receiver in radio 330 of AP 104 or a receiver in a modem on wireless communication circuitry 230 of STA 106) according to a corresponding communications protocol or standard (e.g., an IEEE 802.11 protocol or standard). The radio-frequency signals may be conveyed in one or more frequency bands associated with the communications protocol.

Implementations in which AP 104 and STA 106 communicate according to an IEEE 802.11 protocol or standard are described herein as an example. Under an 802.11 protocol, the wireless data is organized into a series or flow of frames (e.g., media access control (MAC) frames) carried by the radio-frequency signals. The frames, which are sometimes also referred to as packets, may include management frames, control frames, data frames, beacon frames, association frames, authentication frames, acknowledgement (ACK) frames, block ACK frames, trigger frames, trigger response frames, and/or other types of frames. Each frame may include a frame header, body (e.g., after the header), and trailer (e.g., after the body). The header may include, for example, source address (SA) information identifying the transmitter of the frame (sometimes also referred to herein as transmitter address (TA) information that identifies a corresponding TA), destination address information identifying the intended recipient of some or all of the frame (sometimes also referred to herein as recipient address (RA) information that identifies a corresponding RA), routing information, identifier information identifying one or more aspects of some or all of the frame (e.g., information identifying the type of frame), Association Identifier (AID) fields, control information, etc. The body may include, for example, a data payload (e.g., a payload of voice data, video data, web browsing data, application data, etc.). The trailer may include checking information that helps to verify the frame to the recipient. The checking information may include a frame check sequence (FCS) or cyclic redundancy check (CRC) field, as examples. If desired, the header, body, and/or trailer may include one or more message integrity check (MIC) fields (e.g., hash values or the output of other cryptographic functions that take as an input different portions of the frame and that are used to verify the integrity of the frame when received by a recipient).

Under a bidirectional communications link between AP 104 and STA 106, frames are conveyed both from AP 104 to STA 106 and from STA 106 to AP 104. STA 106 may transmit one or more ACK frames or block ACK frames to AP 104 to acknowledge the successful receipt of one or more frames transmitted by AP 104. AP 104 may transmit one or more ACK frames or block ACK frames to STA 106 to acknowledge the successful receipt of one or more frames transmitted by AP STA 106.

Radio-frequency signals are transmitted in a downlink (DL) direction from AP 104 to STA 106. Radio-frequency signals transmitted in the DL direction are sometimes also referred to herein as DL signals. The DL signals may carry DL data (e.g., DL frames transmitted by AP 104 to STA 106). Radio-frequency signals are transmitted in an uplink (UL) direction from STA 106 to AP 104. Radio-frequency signals transmitted in the UL direction are sometimes also referred to herein as UL signals. The UL signals may carry UL data (e.g., UL frames transmitted by STA 106 to AP 104).

A given AP 104 may support, maintain, and/or implement a Basic Service Sets (BSS) used in communicating with at least one STA 106 (e.g., according to the corresponding 802.11 protocol). If desired, a single physical AP 104 may concurrently support, maintain, and/or implement multiple BSS's (e.g., may support wireless communications with different STAs associated with multiple BSS's). The AP may, for example, utilize a first BSS to communicate with a first set of one or more STAs 106, a second BSS to communicate with a second set of one or more STAs 106, etc. When communications between AP 104 and a given STA 106 are initiated, the STA registers with AP 104 and is thereafter associated with a corresponding BSS of the AP (a procedure referred to as Association). A BSS may include and/or identify corresponding communications/operating parameters, device capabilities, security level information, and/or other information associated with the communications services provided by AP 104 to one or more STAs under that BSS.

Each BSS may be identified by a corresponding BSS identifier (BSSID). The BSSID may, for example, represent or correspond to a particular network address (e.g., MAC address) and/or wireless network name that is established, possessed, and/or maintained by the AP for wirelessly communicating using the corresponding BSS. If desired, a given AP 104 may concurrently or simultaneously support, implement and/or maintain multiple BSSIDs, in a communications scheme sometimes referred to herein as performing multiple BSSID (M-BSSID) operations or M-BSSID communications. When configured to perform M-BSSID communications, each BSSID maintained by AP 104 corresponds to a different network address (e.g., MAC address) and wireless network name maintained and operated by the AP.

Consider one example in which AP 104 is a Wi-Fi router or hot spot on a college campus and that is configured to perform M-BSSID communications. In this example, AP 104 may concurrently maintain a first BSSID named "STUDENT" for STAs 106 operated by students of the college campus and corresponding to a first MAC address of AP 104, a second BSSID named "STAFF" for STAs 106 operated by staff of the college campus and corresponding to a second MAC address of AP 104, a third BSSID named "GUEST" for STAs 106 operated by guests of the college campus, etc. Each BSSID may have different respective operating characteristics, security configurations, and/or settings. When a STA 106 enters the wireless coverage area of the AP, the user of the STA may interact with a user interface of the STA to select one of the BSSIDs of the AP to connect to. The AP may then associate the STA with or to that BSSID (e.g., if the STA meets one or more security conditions related to the BSSID such as being registered to a user who is granted access to that BSSID, providing a correct password to access that BSSID, etc.). Once associated with a given BSSID, the STA and the AP use that BSSID (e.g., the BSS identified by the BSSID) to convey wireless data. This example is illustrative and non-limiting.

When configured to perform M-BSSID communications (e.g., under a M-BSSID communication scheme), AP 104 transmits a single beacon frame for multiple BSSIDs to minimize signaling overhead. The beacon frame may, for example, advertise the different BSSIDs of AP 104 using a M-BSSID element of the beacon frame. In some implementations (e.g., previous versions of the 802.11 protocol), the AP is unable to serve enhanced multilink single radio (EMLSR) STAs associated with different BSSIDs simultaneously in a multi-user (MU) manner. In these implementations, only sequential data transmission may be possible (e.g., where data for STAs associated with a first BSSID is conveyed during a first transmission opportunity (TXOP) before data for STAs associated with a second BSSID is conveyed during a second TXOP). This can produce excessive latency and can reduce data throughput for the wireless data conveyed between the STAs and the AP.

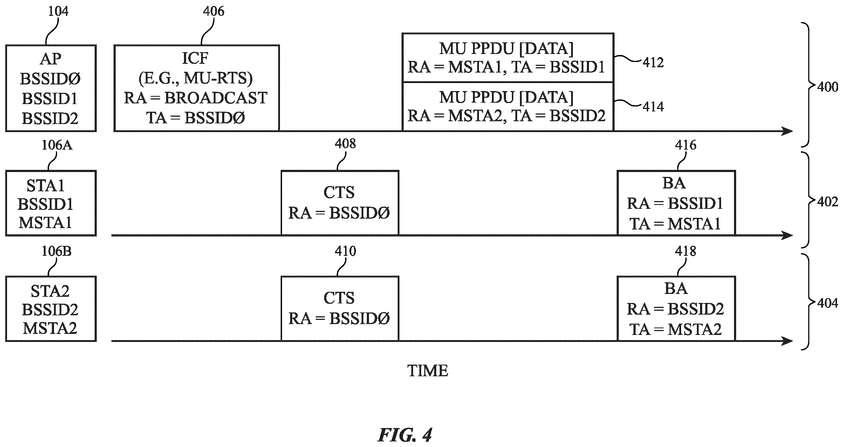

The communications protocol used to perform communications between AP 104 and STAs 106 may define a M-BSSID control frame to mitigate these latency and throughput issues. AP 104 may transmit (broadcast) the M-BSSID control frame to multiple STAs 106 of different BSSIDs prior to UL or DL data transmission. FIG. 4 is a timing diagram showing one example of how an AP 104 may transmit a M-BSSID control frame to STAs 106 of different BSSIDs prior to transmission of DL data to the STAs.

In the example of FIG. 4, row 400 illustrates frame transmission by AP 104, row 402 illustrates frame transmission by a first STA 106A (also denoted as STA1), and row 404 illustrates frame transmission by a second STA 106B (also denoted as STA2). AP 104 has a dedicated BSSID such as BSSID0 (e.g., a first MAC address uniquely assigned to the physical device forming AP 104 during manufacture or assembly of AP 104). BSSID0 is sometimes also referred to herein as "transmitted" BSSID0. Transmitted BSSID0 uniquely identifies AP 104 and is not used for the common management signaling. Transmitted BSSID0 may be used to refer to or otherwise address AP 104 during beacon frame transmission and/or subsequent communications. AP 104 is configured to perform M-BSSID communications and operates/maintains two or more BSSIDs that are used for associating one or more STAs 106, sometimes also referred to herein as "non-transmitted" BSSIDs.

In the example of FIG. 4, AP 104 concurrently supports at least a first non-transmitted BSSID1 (e.g., a first network name associated with a second MAC address maintained at AP 104) and a second non-transmitted BSSID2 (e.g., a second network name associated with a third MAC address maintained at AP 104). STA 106A may be associated with BSSID1. STA 106A may have a corresponding network address such as MAC address MSTA1. MAC address MSTA1 may uniquely identify STA 106A. STA 106B may be associated with BSSID2. STA 106B may have a corresponding network address such as MAC address MSTA2. MAC address MSTA2 may uniquely identify STA 106B.

As shown in FIG. 4, AP 104 may transmit a M-BSSID control frame such as initial control frame (ICF) 406 to all STAs associated with the non-transmitted BSSIDs maintained by AP 104. ICF 406 may be a MU Request to Send (MU-RTS) frame or another type of ICF preceding or initiating DL data transmission. ICF 406 may have a header (e.g., a MAC header) with a receiver address (RA) field set to "BROADCAST" (e.g., including one or more bits indicating or identifying a broadcast address, that ICF 406 is a broadcast frame, and/or that ICF 406 is intended to be received by all STAs 106 associated with AP 104). The header may also have a transmitter address (TA) field set to the BSSID0 of AP 104 (e.g., the TA field may include one or more bits that indicate or identify the MAC address of BSSID0). Transmitter address (TA) is sometimes also referred to as a source address. Receiver address (RA) is sometimes also referred to as a destination address.

STA 106A and STA 106B may receive ICF 406. After a short receipt and processing period (e.g., in response to receiving ICF 406 and after at least a Short Interframe Space (SIFS) has elapsed since the end of the transmission of ICF 406), STA 106A may transmit a Clear to Send (CTS) frame 408 to AP 104. The header of CTS frame 408 may have an RA field set to the transmitted BSSID0 of AP 104, indicating that CTS frame 408 is to be received by AP 104 (e.g., STA 106A may generate CTS frame 408 to include, in its RA field, the transmitted BSSID0 identified by the TA field of ICF 406). STA 106B may concurrently transmit a CTS frame 410. The header of CTS frame 410 may also have an RA field set to the transmitted BSSID0 of AP 104, indicating that CTS frame 410 is to be received by AP 104 (e.g., STA 106B may generate CTS frame 410 to include, in its RA field, the transmitted BSSID0 identified by the TA field of ICF 406). CTS frames 408 and 410 may indicate, to AP 104, that AP 104 is clear to send DL data to STA 106A and STA 106B.

AP 104 may receive CTS frame 408 and CTS frame 410. Responsive to receipt of the CTS frames and after a short receipt and processing time (e.g., after at least a SIFS has elapsed since the end of the transmission of the CTS frames), AP 104 may transmit a first data frame 412 to STA 106A and may transmit a second data frame 414 to STA 106B (e.g., concurrent with transmission of data frame 412). Data frames 412 and 414 may be, for example, MU physical protocol data unit (PPDU) frames.

AP 104 may generate the RA field in the header of data frame 412 to include or identify the MAC address MSTA1 of STA 106A, uniquely indicating that data frame 412 is intended for receipt by STA 106A (e.g., data frame 412 may have RA = MSTA1). AP 104 may generate the TA field in the header of data frame 412 to include or identify the BSSID1 of STA 106A (e.g., data frame 412 may have TA = BSSID1, indicating that data frame 412 was transmitted by BSSID1 of AP 104). Similarly, AP 104 may set the RA field in the header of data frame 414 to include or identify the MAC address MSTA2 of STA 106B, uniquely indicating that data frame 414 is intended for receipt by STA 106B (e.g., data frame 414 may have RA = MSTA2). AP 104 may set the TA field in the header of data frame 414 to include or identify the BSSID2 of STA 106B (e.g., data frame 414 may have TA = BSSID2, indicating that data frame 414 was transmitted by BSSID2 of AP 104).

STA 106A may receive data frame 412. Responsive to receipt of data frame 412 and after a short receipt and processing time (e.g., after at least a SIFS has elapsed since the end of the transmission of data frame 412), STA 106A may transmit an acknowledgement frame such as Block Acknowledgement (BA) frame 416 to AP 104. STA 106A may include or identify the MAC address MSTA1 of STA 106A in the TA field of BA frame 416, uniquely indicating that BA frame 416 was transmitted by STA 106A (e.g., BA frame 416 may have a TA = MSTA1). STA 106A may include or identify the BSSID1 associated with STA 106A in the RA field of BA frame 416, indicating that BA frame 416 is intended for receipt by the non-transmitted BSSID1 of AP 104 (e.g., BA frame 416 may have RA = BSSID1). BA frame 416 may serve as an acknowledgement, to AP 104, that STA 106A has successfully received the wireless data payload of data frame 412, after which AP 104 may transmit subsequent DL data frames to STA 106A and/or STA 106A may transmit subsequent UL data frames to AP 104.

Similarly, STA 106B may receive data frame 414 (e.g., concurrent with receipt of data frame 412 at STA 106A). Responsive to receipt of data frame 414 and after a short receipt and processing time (e.g., after at least a SIFS has elapsed since the end of the transmission of data frame 414), STA 106B may transmit an acknowledgement frame such as BA frame 418 to AP 104. STA 106B may include or identify the MAC address MSTA2 of STA 106B in the TA field of BA frame 418, uniquely indicating that BA frame 418 was transmitted by STA 106B (e.g., BA frame 418 may have a TA = MSTA2). STA 106B may include or identify the BSSID2 associated with STA 106B in the RA field of BA frame 418, indicating that BA frame 418 is intended for receipt by the BSSID2 of AP 104 (e.g., BA frame 418 may have RA = BSSID2). BA frame 418 may serve as an acknowledgement, to AP 104, that STA 106B has successfully received the wireless data payload of data frame 414, after which AP 104 may transmit subsequent DL data frames to STA 106B and/or after which STA 106B may transmit subsequent UL data frames to AP 104. The frame structures for frames 406-418 may be specified by the communications protocol governing communications between STAs 106 and AP 104 (e.g., an 802.11 protocol).

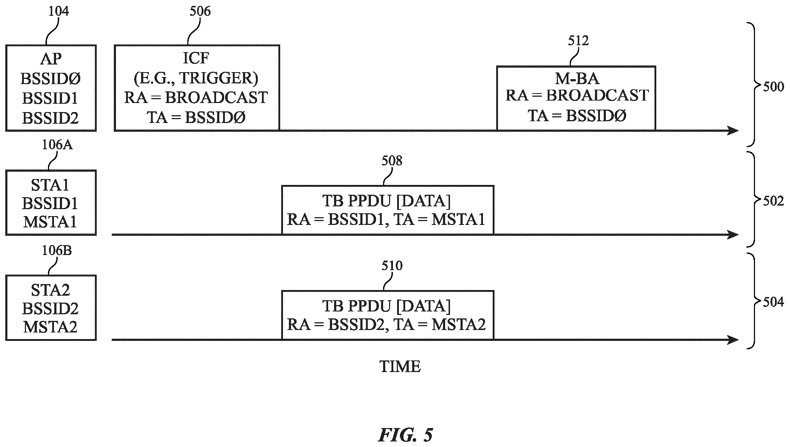

FIG. 5 is a timing diagram showing one example of how AP 104 may transmit a control frame to STAs 106 of different BSSIDs prior to transmission of UL data from the STAs to the AP. In the example of FIG. 5, row 500 illustrates frame transmission by AP 104, row 502 illustrates frame transmission by STA 106A, and row 504 illustrates frame transmission by STA 106B.

As shown in FIG. 5, AP 104 may transmit a control frame such as ICF 506 to all STAs associated with the non-transmitted BSSIDs maintained by AP 104. ICF 506 may be a trigger frame (TF) that triggers UL data transmission by STAs 106 or another type of ICF preceding or initiating UL data transmission by STAs 106. AP 104 may set the RA field in the header of ICF 506 to a broadcast address and may set the TA field in the header of ICF 506 to the transmitted BSSID0 of AP 104.

STA 106A and STA 106B may receive ICF 506. After a short receipt and processing period (e.g., in response to receiving ICF 506 and after at least a SIFS has elapsed since the end of the transmission of ICF 506), STA 106A may transmit a UL data frame such as data frame 508 (e.g., ICF 506 may trigger the transmission of data frame 508). Similarly, STA 106B may transmit a UL data frame such as data frame 510 responsive to receipt of ICF 506 (e.g., ICF 506 may trigger the transmission of data frame 510). Data frames 508 and 510 may be, for example, trigger based (TB) PPDU frames (e.g., frames that are triggered by receipt of a trigger frame and having data payloads that carry UL data for receipt at AP 104).

STA 106A may set the TA field in the header of data frame 508 to include or identify the MAC address MSTA1 of STA 106A, uniquely indicating that data frame 508 was transmitted by STA 106A. STA 106A may set the RA field in the header of data frame 508 to include or identify the BSSID associated with STA 106A (e.g., BSSID1), indicating that data frame 508 is intended for receipt by BSSID1 of AP 104. Similarly, STA 106B may set the TA field in the header of data frame 510 to include or identify the MAC address MSTA2 of STA 106B, uniquely indicating that data frame 510 was transmitted by STA 106B. STA 106B may set the RA field in the header of data frame 510 to include or identify the BSSID associated with STA 106B (e.g., BSSID2), indicating that data frame 510 is intended for receipt by BSSID2 of AP 104.

AP 104 may receive data frames 508 and 510. Responsive to receipt of data frames 508 and 510 and after a short receipt and processing time (e.g., after at least a SIFS has elapsed since the end of the transmission of data frames 508 and 510), AP 104 may broadcast an acknowledgement frame such as multi-STA Block Acknowledgement (M-BA) frame 512. AP 104 may, for example, set the RA field in the header of M-BA frame 512 to a broadcast address ("BROADCAST") and may set the TA field in the header of M-BA frame 512 to BSSID0, uniquely identifying that AP 104 transmitted M-BA frame 512. M-BA frame 512 may serve as an acknowledgement, to STAs 106A and 106B, that AP 104 has successfully received the wireless data payload of data frames 508 and 510, after which STAs 106A and 106B may transmit subsequent data frames to AP 104 and/or after which AP 104 may transmit subsequent data frames to STA 106A and/or STA 106B. The frame structures for frames 506-512 may be specified by the communications protocol governing communications between STAs 106 and AP 104 (e.g., an 802.11 protocol).

To help optimize the security of wireless communications by AP 104, AP 104 may protect the ICFs transmitted to STAs 106 under the M-BSSID scheme (e.g., MU-RTS frames as shown in FIG. 4, trigger frames as shown in FIG. 5, etc.). ICFs that have been integrity protected by AP 104 are sometimes referred to herein as integrity-protected ICFs or secured CIFS (SICFs). Integrity protecting the ICFs may help the STAs to verify that the ICFs and subsequent data frames were in fact transmitted by AP 104 rather than an unauthorized device or network intruder (e.g., a so-called man-in-the-middle (MITM) attacker).

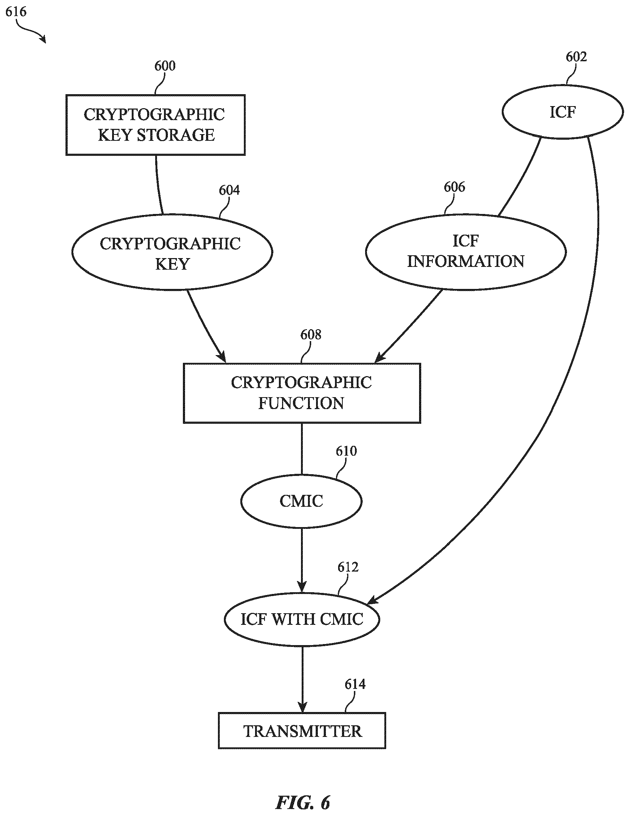

To integrity protect an ICF, AP 104 may generate a Control Message Integrity Check (CMIC) for the ICF (sometimes also referred to herein as a CMIC field, CMIC information, or CMIC bits). AP 104 may include the CMIC in the ICF transmitted to STAs 106. FIG. 6 is a diagram showing how an illustrative transmitter device 616 may generate an integrity-protected frame for transmission to a corresponding receiver device. In the example of FIG. 6, transmitter device 616 may be an AP 104 that generates an integrity-protected ICF from an unprotected ICF such as ICF 602 for transmission to a STA 106. This is illustrative and non-limiting. In general, transmitter device 616 may be any desired device (e.g., a STA 106) that transmits any desired integrity-protected frame to any type of receiver device (e.g., ICF 602 of FIG. 6 may be replaced with any desired frame to be integrity protected).

As shown in FIG. 6, transmitter device 616 may include cryptographic key storage 600 (e.g., in memory 360 or ROM 350 of FIG. 3), a cryptographic function 608 (e.g., implemented and/or executed using digital and/or analog logic, processor(s) 304 of FIG. 3, etc.), and a wireless transmitter such as transmitter 614 (e.g., a radio 330 and/or communication chain 332 of FIG. 3). Cryptographic key storage 600 may include a table, database, other types of data structures, and/or dedicated storage on transmitter device 616 (e.g., hardcoded and/or encrypted key storage on AP 104). Cryptographic function 608 may include a hashing function/algorithm. As one example, cryptographic function 608 may be a Galois Message Authentication Code (GMAC) function or algorithm.

To integrity protect an initial/unprotected ICF such as ICF 602, transmitter device 616 may provide ICF information 606 from ICF 602 as a first input to cryptographic function 608. ICF information 606 may include some or all of one or more fields of ICF 602 (e.g., some or all of a payload of ICF 602, some or all of one or more fields of the header of ICF 602, etc.). Transmitter device 616 may also provide a selected cryptographic key 604 from cryptographic key storage 600 as a second input to cryptographic function 608. Cryptographic function 608 may generate (e.g., calculate, compute, output, etc.) CMIC 610 based on the selected cryptographic key 604 and ICF information 606 (e.g., by hashing ICF information 606 with the selected cryptographic key 604 according to a GMAC algorithm or another hashing algorithm). Transmitter device 616 may then insert CMIC 610 into a corresponding field of ICF 602, producing integrity-protected ICF 612. Transmitter 614 may transmit integrity-protected ICF 612 to a corresponding receiver device.

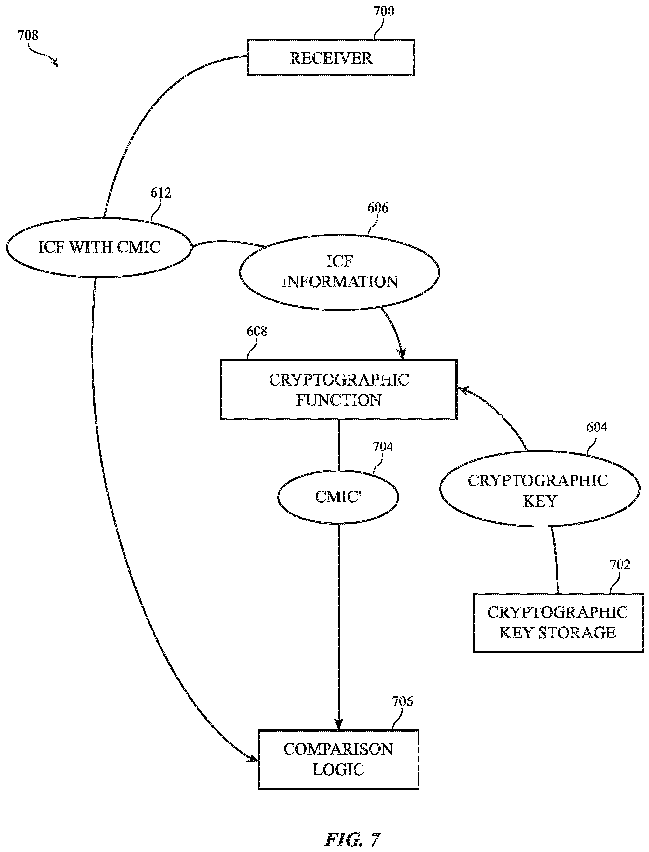

FIG. 7 is a diagram showing how an illustrative receiver device 708 may receive and perform integrity check of an integrity-protected frame received from transmitter device 616 of FIG. 6. In the example of FIG. 7, receiver device 708 may be a STA 106 that performs integrity checks of an integrity-protected ICF 612 received from AP 104. This is illustrative and non-limiting. In general, receiver device 708 may be any desired device (e.g., AP 104) that receives any desired integrity-protected frame from any type of transmitter device (e.g., integrity-protected ICF 612 of FIG. 7 may be replaced with any desired integrity-protected frame).

As shown in FIG. 7, receiver device 708 may include cryptographic key storage 702 (e.g., in memory 206 or ROM 250 of FIG. 2), cryptographic function 608 (e.g., implemented and/or executed using digital and/or analog logic, processor(s) 202 of FIG. 2, etc.), and a wireless receiver such as receiver 700 (e.g., in wireless communication circuitry 230 of FIG. 2). Cryptographic key storage 702 may include a table, database, other types of data structures, and/or dedicated key storage on transmitter device 616 (e.g., hardcoded and/or encrypted key storage on STA 106). Cryptographic function 608 may be the same cryptographic function used by transmitter device 616 (FIG. 6) to generate integrity-protected ICF 612.

Receiver 700 may receive integrity-protected ICF 612 from transmitter device 616 (FIG. 6). Receiver device 708 may extract ICF information 606 (e.g., the integrity-protected portion of ICF 602 of FIG. 6) from integrity-protected ICF 612 and may provide ICF information 606 as a first input to cryptographic function 608. Receiver device 708 may also provide the selected cryptographic key 604 from cryptographic key storage 702 as a second input to cryptographic function 608. Receiver device 708 may receive the selected cryptographic key 604 from transmitter device 616 (FIG. 6) during an initial registration, association, and/or handshake operation between transmitter device 616 and receiver device 708. Receiver device 708 may receive information identifying which cryptographic key stored on cryptographic key storage 702 to provide to cryptographic function 608 (i.e., the selected cryptographic key 604) based on one or more bits within one or more fields of integrity-protected ICF frame 612 and/or in another frame received from transmitter device 616 (FIG. 6).

Cryptographic function 608 may generate (e.g., calculate, compute, output, etc.) a candidate CMIC such as candidate CMIC 704 (denoted as CMIC') based on the selected cryptographic key 604 and ICF information 606 (e.g., by hashing ICF information 606 with the selected cryptographic key 604 according to a GMAC algorithm or another hashing algorithm). Since cryptographic function 608 is the same cryptographic function and selected cryptographic key 604 is the same cryptographic key used by transmitter device 616 to generate the CMIC 610 (FIG. 6) included in integrity-protected ICF 612, the candidate CMIC 704 output by cryptographic function 608 will be the same as CMIC 610 (FIG. 6) if/when integrity-protected ICF 612 is actually the integrity-protected ICF 612 transmitted by transmitter device 616. On the other hand, if/when the frame received by receiver 700 was transmitted by a different device (e.g., an unauthorized device such as a MITM attacker), candidate CMIC 704 will not match CMIC 610.

Receiver device 708 may include comparison logic 706 (e.g., as implemented/executed using digital and/or analog logic and/or processor(s) 202 of FIG. 2). Comparison logic 706 may compare the CMIC 610 (FIG. 6) included within integrity-protected ICF 612 to candidate CMIC 704. If/when comparison logic 706 determines that the CMIC 610 in integrity-protected ICF 612 matches/equals candidate CMIC 704, receiver device 708 successfully integrity checks integrity-protected ICF 612 (e.g., verifying that integrity-protected ICF 612 was transmitted by the expected and authorized transmitter device 616) and may pass the payload of integrity-protected ICF 612 up the protocol stack for further processing. If desired, receiver device 708 may also transmit an acknowledgement frame to transmitter device 616 to acknowledge successful receipt of integrity-protected ICF 612 and additional frames (e.g., data frames) may be conveyed between transmitter device 616 and receiver device 708. On the other hand, if/when comparison logic 706 determines that the CMIC 610 in integrity-protected ICF 612 is different than candidate CMIC 704, receiver device 708 is unable to successfully integrity check integrity-protected ICF 612 (e.g., indicating that the frame may have been transmitted by an unexpected or unauthorized device) and integrity-protected ICF 612 may be discarded. In this way, transmitter device 616 (FIG. 6) may securely and reliably transmit control frames to receiver device 708.

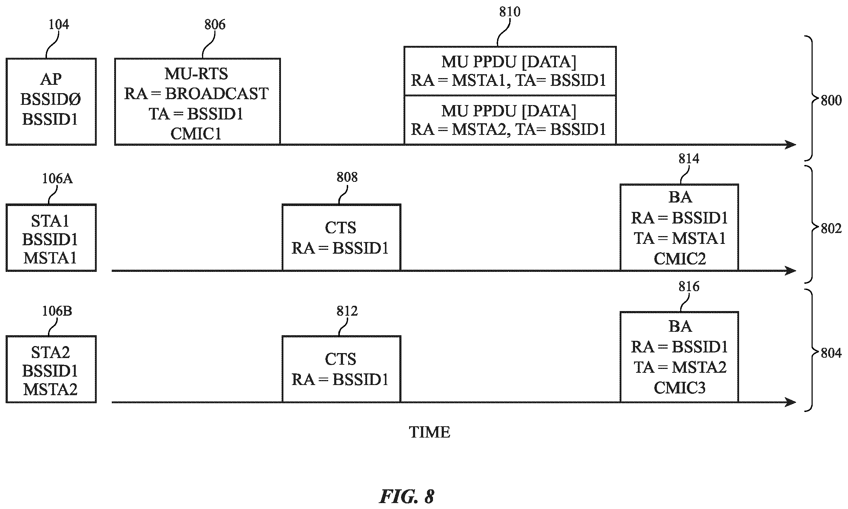

FIG. 8 is a timing diagram showing one example of how a M-BSSID-configured AP 104 may transmit an integrity-protected control frame to STAs 106A and 106B associated with the same BSSID. As shown in FIG. 8, row 800 illustrates frame transmission by AP 104, row 802 illustrates frame transmission by STA 106A, and row 804 illustrates frame transmission by STA 106B. In the example of FIG. 8, STA 106A and STA 106B are both associated with the same non-transmitted BSSID (e.g., BSSID1).

AP 104 may generate an integrity-protected ICF 806. AP 104 may, for example, generate integrity-protected ICF 806 as the integrity-protected ICF 612 of FIG. 6. Integrity-protected ICF 806 may have an RA field set to a broadcast address. Since STA 106A and STA 106B both belong to BSSID1 in this example, AP 104 may set the TA field of integrity-protected ICF 806 to BSSID1. AP 104 may generate a CMIC for integrity-protected ICF 806 (e.g., CMIC 610 of FIG. 6) such as CMIC1. AP 104 may generate CMIC1 using a cryptographic group key corresponding to and/or unique to BSSID1 (e.g., as the selected cryptographic key 604 of FIG. 6). AP 104 may include CMIC1 in a header field or frame body of integrity-protected ICF 806. AP 104 may transmit (broadcast) integrity-protected ICF 806.

STA 106A and STA 106B may receive integrity-protected ICF 806. STA 106A and STA 106B may integrity check integrity-protected ICF 806 using the cryptographic group key corresponding to BSSID1 (e.g., as shown in FIG. 7). STA 106A and STA 106B may receive the cryptographic group key corresponding to BSSID1 during a handshake operation with AP 104 during or after association with BSSID1 of AP 104. Integrity-protected ICF 806 may include information identifying that STA 106A and STA 106B are to use the cryptographic group key corresponding to BSSID1 to integrity check integrity-protected ICF 806. In response to successfully checking the integrity of integrity-protected ICF 806, STA 106A may transmit a CTS frame 808 having an RA field that identifies BSSID1 and STA 106B may transmit a CTS frame 812 having an RA field that identifies BSSID1. AP 104 may receive CTS frames 808 and 812 at/using BSSID1.

Responsive to receipt of the CTS frames, AP 104 may transmit a DL data frame to STA 106A (e.g., a MU PPDU frame having a header with RA = MSTA1 and TA = BSSID1) and may transmit a DL data frame to STA 106B (e.g., a MU PPDU frame having a header with RA = MSTA2 and TA = BSSID1), as shown by blocks 810. STA 106A may receive the data frame addressed to MAC address MSTA1 and STA 106B may receive the data frame addressed to MAC address MSTA2.

Responsive to receipt of the DL data frame, STA 106A may transmit BA frame 814 to BSSID1 of AP 104. BA frame 814 may have an RA field set to BSSID1 and a TA field set to MAC address MSTA1. If desired, STA 106A may integrity protect BA frame 814 by generating an additional CMIC such as CMIC2 based on one or more fields of the BA frame and by inserting CMIC2 into the BA frame (e.g., where STA 106A forms transmitter device 616 and BA frame 814 replaces ICF 602 in FIG. 6)

Similarly, responsive to receipt of the DL data frame, STA 106B may transmit BA frame 816 to BSSID1 of AP 104. BA frame 816 may have an RA field set to BSSID1 and a TA field set to MAC address MSTA2. If desired, STA 106B may integrity protect BA frame 816 by generating an additional CMIC such as CMIC3 based on one or more fields of the BA frame and by inserting CMIC3 into the BA frame (e.g., where STA 106B forms transmitter device 616 and BA frame 816 replaces ICF 602 in FIG. 6). AP 104 may continue to convey wireless data with STA 106A and STA 106B. The example of FIG. 8 illustrates DL data transmission from AP 104 to STAs 106A and 106B. Similar integrity protection may be applied to UL data transmission from STAs 106A and 106B (e.g., as shown in FIG. 5, where an ICF 506 such as a trigger frame may be integrity-protected using CMIC1).

The example of FIG. 8 illustrates integrity protection when STA 106A and STA 106B are both associated with the same BSSID (e.g., BSSID1). In implementations where STA 106A is associated with non-transmitted BSSID1 and STA 106B is associated with BSSID2 (e.g., as shown in FIGS. 4 and 5), integrity protecting the ICF transmitted by AP 104 can lead to excessive latency and reduced data throughput if care is not taken. For example, in some scenarios, STA 106A may only have knowledge of the control frame integrity group key for non-transmitted BSSID1 and STA 106B may only have knowledge of the control frame integrity group key for BSSID2.

In these scenarios, AP 104 can only transmit an integrity-protected ICF for a single non-transmitted BSSID at a time. For example, during a first TXOP, AP 104 may transmit an integrity-protected ICF carrying a first CMIC such as CMIC1 for STAs 106 associated BSSID1 (e.g., STA 106A). After integrity checking the integrity-protected ICF carrying CMIC1, data frames may be conveyed between BSSID1 of AP 104 and the STAs 106 associated with non-transmitted BSSID1. Then, during a second TXOP after the first TXOP, AP 104 may transmit an integrity-protected ICF carrying a second CMIC such as CMIC2 for STAs 106 associated with BSSID2 (e.g., STA 106B). After integrity checking the integrity-protected ICF carrying CMIC2, data frames may be conveyed between BSSID2 of AP 104 and the STAs 106 associated with BSSID2. This process may continue in respective TXOPs for each non-transmitted BSSID of AP 104. Forcing STAs associated with different BSSIDs to be served in different TXOPs in this way can result in reduced data throughput and excessive latency.

To maximize throughput and minimize latency when STA 106A and STA 106B are associated with different BSSIDs, AP 104 may use one or more techniques as described herein to generate an integrity-protected ICF, sometimes also referred to herein as a secured ICF (SICF), for transmission to STAs 106A and 106B. In a first implementation, for example, the SICF may carry separate CMICs for each non-transmitted BSSID of AP 104.

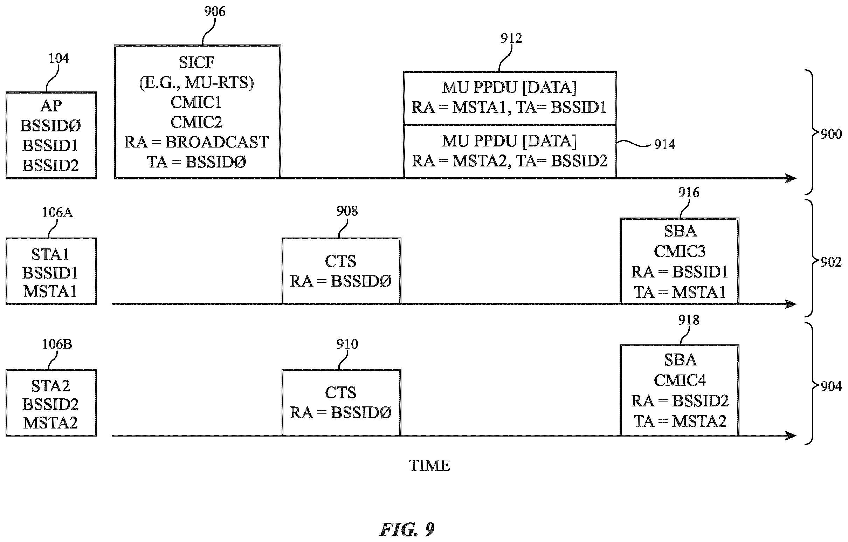

FIG. 9 is a timing diagram showing a DL data transmission example in which AP 104 generates an SICF that carries separate CMICs for each non-transmitted BSSID of AP 104. As shown in FIG. 9, row 900 illustrates frame transmission by AP 104, row 902 illustrates frame transmission by STA 106A, and row 902 illustrates frame transmission by STA 106B. In the example of FIG. 9, STA 106A is associated with BSSID1 and STA 106B is associated with BSSID2.

AP 104 may generate SICF 906. SICF 906 may have an RA field set to "BROADCAST." Because STA 106A and 106B are associated with different BSSIDs, AP 104 may set the TA field of SICF 906 to a unique BSSID such as transmitted BSSID0. AP 104 may generate a first CMIC1 using a first BSSID-specific cryptographic group key associated with BSSID1 (e.g., a first control frame integrity temporal group key) and may generate a second CMIC2 using a second BSSID-specific cryptographic group key associated with BSSID2 (e.g., a second control frame integrity temporal group key) using the processes illustrated in FIG. 6. AP 104 may insert both CMIC1 and CMIC2 into one or more fields of SICF 906. In the DL data transmission scenario illustrated in FIG. 9, SICF may be an integrity-protected MU-RTS, as one example. AP 104 may transmit (broadcast) SICF 906.

STA 106A and STA 106B may receive SICF 906. STA 106A may integrity check SICF 906 using the CMIC1 included in SICF 906 and the first cryptographic group key associated with BSSID1 (e.g., using the processes illustrated in FIG. 7). STA 106A may receive the first cryptographic group key associated with BSSID1 during a handshake operation with AP 104 during or after association with BSSID1 of AP 104. SICF 906 may include information identifying that STA 106A is to use the first cryptographic group key associated with BSSID1 to integrity check SICF 906. In response to successfully checking the integrity of integrity-protected SICF 906, STA 106A may transmit a CTS frame 908 having an RA field that identifies the BSSID0 of AP 104. AP 104 may receive CTS frame 908 at/using BSSID0.

At the same time, STA 106B may integrity check SICF 906 using the CMIC2 included in SICF 906 and the second cryptographic group key associated with BSSID2 (e.g., using the processes illustrated in FIG. 7). STA 106B may receive the second cryptographic group key associated with BSSID2 during a handshake operation with AP 104 during or after association with BSSID2 of AP 104. SICF 906 may include information identifying that STA 106B is to use the second cryptographic group key associated with BSSID2 to integrity check SICF 906. In response to successfully checking the integrity of integrity-protected SICF 906, STA 106B may transmit a CTS frame 910 having an RA field that identifies the BSSID0 of AP 104. AP 104 may receive CTS frame 910 at/using BSSID0. Utilizing BSSID0 in the RA field of both CTS frame 908 and CTS frame 910 may, for example, serve to prevent collision between the CTS frames despite STA 106A and STA 106B being associated with different BSSIDs.

Responsive to receipt of the CTS frames, AP 104 may transmit a DL data frame 912 to STA 106A (e.g., a MU PPDU frame having a header with RA = MSTA1 and TA = BSSID1) and may concurrently transmit a DL data frame 914 to STA 106B (e.g., a MU PPDU frame having a header with RA = MSTA2 and TA = BSSID2). STA 106A may receive DL data frame 912 and STA 106B may receive DL data frame 914.

Responsive to receipt of DL data frame 912, STA 106A may transmit an integrity protected BA frame 916 (sometimes also referred to herein as a secured BA frame (SBA)) to BSSID1 of AP 104 (e.g., having a header with RA = BSSID1 and TA = MSTA1). Responsive to receipt of DL data frame 914, STA 106B may transmit an SBA 918 to BSSID2 of AP 104 (e.g., having a header with RA = BSSID2 and TA = MSTA2). AP 104 may then continue to convey wireless data with STA 106A and STA 106B. The example of FIG. 9 illustrates DL data transmission from AP 104 to STAs 106A and 106B. Similar integrity protection may be applied to UL data transmission from STAs 106A and 106B (e.g., as shown in FIG. 5, where an ICF 506 such as a trigger frame may be integrity-protected using CMIC1 and CMIC2 included in the trigger frame).

Including both CMIC1 and CMIC2 in SICF 906 may serve to minimize latency and maximize data throughput despite STA 106A and STA 106B belonging to different BSSIDs (e.g., allowing for concurrent transmission of DL data frames 912 and 914 rather than transmitting the DL data frames in separate TXOPs). However, including respective CMICs for each non-transmitted BSSID increases the size of the control frame and can undesirably increase protocol overhead and implementation complexity. For example, SICF 906 may need to also include a respective packet number (PN) and key identifier (KeyID) field for each CMIC included in the SICF (e.g., for each BSSID served by the SICF).

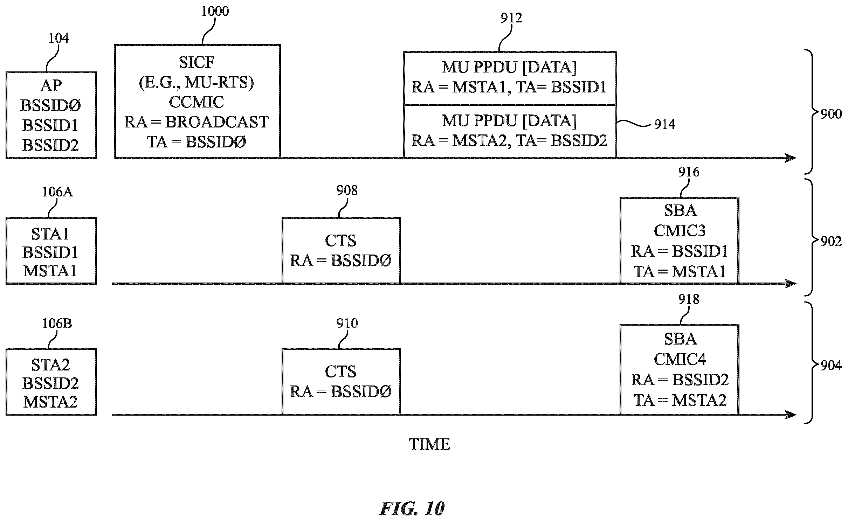

To minimize the size of the SICF (e.g., minimizing protocol overhead and implementation complexity), the SICF may instead include only a single CMIC that is common to (shared by) each of the BSSIDs and STAs served by AP 104. SICF 1000 of FIG. 10 is one example of an SICF that includes only a single common CMIC shared across each of the BSSIDs of AP 104. As shown in FIG. 10, AP 104 may integrity protect SICF 1000 using a common control message integrity check CCMIC (sometimes also referred to herein as a shared or combined CCMIC, CCMIC field, CCMIC information, or CCMIC bits). AP 104 may include common control message integrity check CCMIC in a header field or frame body of SICF 1000.

AP 104 may generate common control message integrity check CCMIC using a selected cryptographic group key (e.g., using the processes illustrated in FIG. 6). The selected cryptographic group key may be used by the STAs associated with all or a subset of the non-transmitted BSSIDs of AP 104 to integrity check SICF 1000. For example, STA 106A may use the selected cryptographic group key to integrity check the SICF 1000 received from AP 104 (e.g., using the processes illustrated in FIG. 7). STA 106B may also use the selected cryptographic group key to integrity check the SICF 1000 received from AP 104 (e.g., using the processes illustrated in FIG. 7), even though STA 106B is associated with a different BSSID than STA 106A. STA 106A and STA 106B may receive the selected cryptographic group key used to generate common control message integrity check CCMIC in a handshake operation with AP 104 during or after association with AP 104. If desired, SICF 1000 may include information identifying the selected cryptographic group key to be used by STAs 106A and 106B in integrity checking SICF 1000. In response to successfully checking the integrity of integrity-protected SICF 1000, STA 106A may transmit CTS frame 908 and STA 106B may transmit CTS frame 910.

The examples of FIGS. 4, 5, 9, and 10 illustrate a simplest case in which AP 104 has two non-transmitted BSSIDs (e.g., BSSID1 and BSSID2). This is illustrative and non-limiting. In general, AP 104 may have more than two non-transmitted BSSIDs. The examples of FIGS. 5, 9, and 10 illustrate a simplest case in which BSSID1 and BSSID2 are each associated with a single STA 106. This is illustrative and non-limiting. In general, any desired number of STAs may be associated with each non-transmitted BSSID of AP 104. In other words, the systems and methods described herein may be applied and generalized to any number of STAs 106 associated with any number of non-transmitted BSSIDs of a given AP 104.

Different cryptographic group keys may be utilized by AP 104 to generate common control message integrity check CCMIC for SICF 1000 (e.g., using the processes of FIG. 6) and to verify the integrity of SICF 1000 at STAs 106 (e.g., using the processes of FIG. 7). As one example, AP 104 may use a BSSID-specific control frame integrity group temporal key (CIGTK) (sometimes also referred to herein as a control frame integrity group key, a control integrity group key, a control integrity temporal key, or a control integrity temporal group key) to generate common control message integrity check CCMIC.

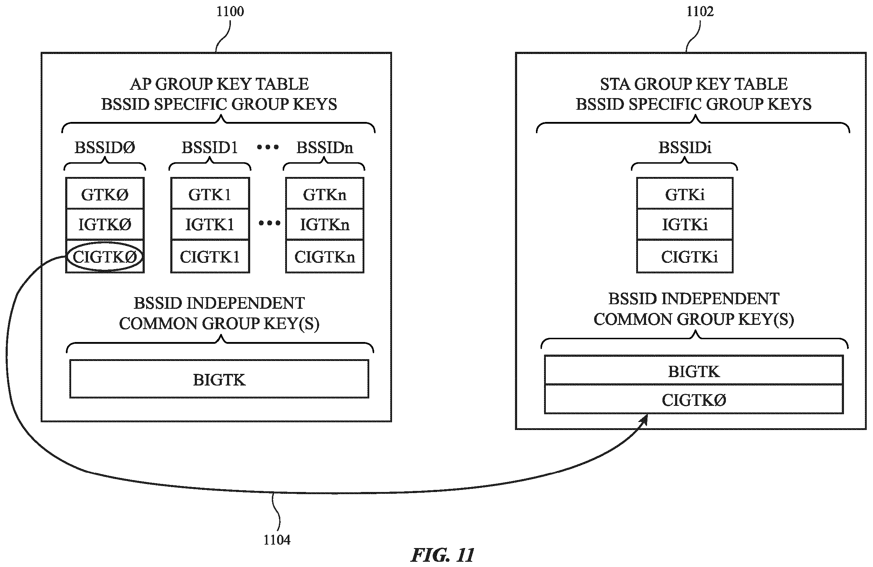

FIG. 11 is a diagram of illustrative group key tables that may be maintained at AP 104 and a given STA 106 (e.g., STA 106A or STA 106B of FIG. 10) for use in integrity protection and verification for SICF 1000. As shown in FIG. 11, AP 104 may store and maintain an AP group key table 1100. AP 104 may, for example, store AP group key table 1100 in cryptographic key storage 600 of FIG. 6 when AP 104 forms transmitter device 616 of FIG. 6 (e.g., when the SICF precedes subsequent DL data frame transmission to STAs 106) and/or in cryptographic key storage 702 of FIG. 7 (e.g., when the SICF precedes subsequent UL data transmission by STAs 106). A given STA 106 (e.g., STA 106A or STA 106B) may store and maintain a STA group key table 1102. STA 106 may, for example, store STA group key table 1102 in cryptographic key storage 600 of FIG. 6 when STA 106 forms transmitter device 616 of FIG. 6 (e.g., for transmitting an integrity-protected BA frame to AP 104) and/or in cryptographic key storage 702 of FIG. 7 when STA 106 forms receiver device 708 of FIG. 7 (e.g., when integrity checking received SICF frames). Group key tables 1100 and 1102 may include tables, database entries, register entries, and/or any other desired data structures.

As shown in FIG. 11, AP group key table 1100 may include a set of BSSID-specific group keys, each corresponding to a particular BSSID of AP 104. The first column of the set of BSSID-specific group keys shown in AP group key table 1100 of FIG. 11 may be associated with the transmitted BSSID of AP 104 (i.e., BSSID0). The BSSID-specific group keys associated with BSSID0 may include a group temporal key (GTK) such as group temporal key GTK0, an integrity group temporal key (IGTK) such as integrity group temporal key IGTK0, and a control frame integrity group temporal key CIGTK such as control frame integrity group temporal key CIGTKO. The remaining n columns of the set of BSSID-specific group keys shown in AP group key table 1100 of FIG. 11 may each be associated with a different respective non-transmitted BSSID maintained by AP 104, from a first non-transmitted BSSID (e.g., BSSID1) to an n^{th} non-transmitted BSSID (e.g., BSSIDn). Each non-transmitted BSSID may have a corresponding group temporal key GTK, integrity group temporal key IGTK, and control frame integrity group temporal key CIGTK (e.g., BSSID1 may have a corresponding GTK such as GTK1, IGTK such as IGTK1, and CIGTK such as CIGTK1, BSSIDn may have a corresponding GTK such as GTKn, IGTK such as IGTKn, and CIGTK such as CIGTKn, etc.).

STA group key table 1102 may also include BSSID-specific group keys for the BSSID associated with the STA 106 having STA group key table 1102 (e.g., BSSIDi, where i is an integer index from 1 to n that identifies the BSSID associated with the STA). The BSSID-specific group keys may include a corresponding group temporal key GTKi (e.g., GTK1 when the STA 106 having STA group key table 1102 is associated with BSSID1, GTKn when the STA 106 having STA group key table 1102 is associated with BSSIDn, etc.), a corresponding integrity group temporal key IGTKi (e.g., IGTK1 when the STA 106 having STA group key table 1102 is associated with BSSID1, IGTKn when the STA 106 having STA group key table 1102 is associated with BSSIDn, etc.), and a corresponding control frame integrity group temporal key CIGTKi (e.g., CIGTK1 when the STA 106 having STA group key table 1102 is associated with BSSID1, CIGTKn when the STA 106 having STA group key table 1102 is associated with BSSIDn, etc.).

AP 104 may use BSSID-specific group temporal keys GTK1 through GTKn to generate hash codes appended to the end of DL data frames transmitted to the STAs 106 (e.g., DL PPDU frames) associated with the corresponding BSSIDs (e.g., by hashing message data from the DL data frames with the corresponding group temporal key GTK). AP 104 may, for example, encrypt data frames transmitted to STAs 106 that are associated with BSSID1 using group temporal key GTK1, may encrypt data frames transmitted to STAs 106 that are associated with BSSIDn using group temporal key GTKn, etc. STA 106 may then use its stored group temporal key GTKi to decrypt the message data encrypted using the same group temporal key GTKi at AP 104.

AP 104 may use integrity group temporal keys IGTK to integrity protect management frames that are transmitted to the STAs 106 associated with the corresponding BSSIDs. This may include generating CMICs for the management frames using the corresponding integrity group temporal key IGTK and inserting the generated CMICs into the management frames transmitted to STAs 106. STA 106 may then use its stored integrity group temporal key IGTKi to generate the CMIC for its associated BSSIDi and may compare the generated CMIC to the CMIC included with the management frame to verify that the management frame was transmitted by the expected AP 104.

AP 104 may use control frame integrity group temporal keys CIGTK to integrity protect control frames (e.g., ICFs) that are addressed to the STAs 106 of a single BSSID. This may include generating a CMIC for an ICF using the corresponding control frame integrity group temporal key CIGTK, inserting the generated CMIC into the ICF, and transmitting the ICF to STAs 106 of the corresponding BSSID. STA 106 may then use its stored control frame integrity group temporal key CIGTKi to generate the CMIC for its associated BSSIDi and may compare the generated CMIC to the CMIC included with the ICF to verify that the ICF frame was transmitted by the expected AP 104.

AP group key table 1100 and STA group key table 1102 may also store a BSSID-independent common group key such as a beacon integrity group temporal key (BIGTK). AP 104 may use the BIGTK to integrity protect beacon frames transmitted to STAs 106. Because AP 104 transmits a single beacon frame to all STAs and BSSIDs under the M-BSSID communications scheme, all STAs 106 may use the same BIGTK to integrity check and/or decrypt the beacon frame regardless of the BSSIDs of the STAs.

In the example of FIG. 11, AP 104 generates SICF 1000 (FIG. 10) based on the control frame integrity group temporal key CIGTKO of its transmitted BSSID0. AP 104 may, for example, use control frame integrity group temporal key CIGTKO from AP group key table 1100 as the selected cryptographic key 604 provided to cryptographic function 608 (FIG. 6), which outputs the common control message integrity check CCMIC (e.g., as CMIC 610 of FIG. 6). AP 104 may then insert the CCMIC into a field of SICF 1000 and may transmit SICF 1000 to STA 106 (e.g., as integrity-protected ICF 612 of FIG. 6). Since control frame integrity group temporal key CIGTKO is specific to AP 104 but not specific to any non-transmitted BSSIDs, the same control frame integrity group temporal key CIGTKO may be particularly suitable for generating SICF 1000, which is broadcast across the BSSIDs of AP 104.

As shown by arrow 1104, STA 106 may also store the control frame integrity group temporal key CIGTKO associated with the transmitted BSSID0 of AP 104 (e.g., as one of its BSSID-independent common group keys in STA group key table 1102). STA 106 may, for example, receive control frame integrity group temporal key CIGTKO from AP 104 during a handshake operation prior to transmission of SICF 1000 by AP 104. STA 106 may receive the SICF 1000 transmitted by AP 104 and integrity check SICF 1000 based on control frame integrity group temporal key CIGTKO. STA 106 may, for example, use control frame integrity group temporal key CIGTKO from STA group key table 1102 as the selected cryptographic key 604 provided to cryptographic function 608 (FIG. 7), which outputs the common control message integrity check CCMIC (e.g., as candidate CMIC 704 of FIG. 7). STA 106 may then compare its generated common control message integrity check CCMIC to the common control message integrity check CCMIC received in SICF 1000 to verify that SICF was transmitted by the expected AP 104.

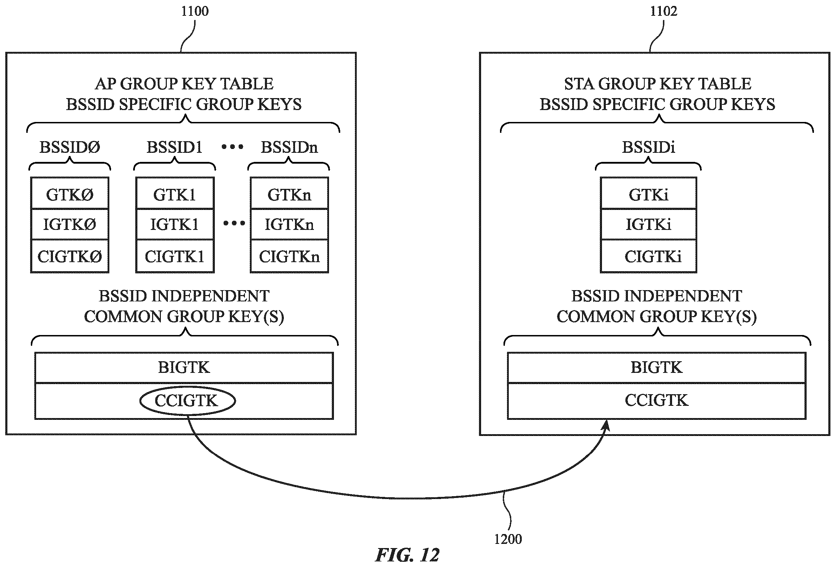

In the example of FIG. 11, the control frame integrity group temporal key CIGTKO associated with the transmitted BSSID0 of AP 104 is used to generate the common control message integrity check CCMIC of SICF 1000. As another example, shown in FIG. 12, AP 104 may use a dedicated (e.g., unique or newly-defined) control frame integrity group temporal key CCIGTK (sometimes also referred to herein as a common control frame integrity group temporal key, a control frame integrity temporal key, a control integrity group temporal key, or a control integrity group key) for use in generating the common control message integrity check CCMIC of SICF 1000. Dedicated control frame integrity group temporal key CCIGTK is different from the control frame integrity group temporal key CIGTKO associated with the transmitted BSSID0 of AP 104 and is different from each of the control frame integrity group temporal keys CIGTK1 through CIGTKn associated with each of the non-transmitted BSSIDs (e.g., BSSID1 through BSSIDn) of AP 104.

As shown in FIG. 12, AP group key table 1100 may store dedicated control frame integrity group temporal key CCIGTK as one of its BSSID-independent common group keys. AP 104 may generate SICF 1000 (FIG. 10) based on the dedicated control frame integrity group temporal key CCIGTK stored at AP group key table 1100. AP 104 may, for example, use dedicated control frame integrity group temporal key CCIGTK as the selected cryptographic key 604 provided to cryptographic function 608 (FIG. 6), which outputs the common control message integrity check CCMIC (e.g., as CMIC 610 of FIG. 6). AP 104 may then insert the CCMIC into a field of SICF 1000 and may transmit SICF 1000 to STA 106 (e.g., as integrity-protected ICF 612 of FIG. 6).

As shown by arrow 1200, STA 106 may also store the dedicated control frame integrity group temporal key CCIGTK as one of its BSSID-independent common group keys. STA 106 may, for example, receive dedicated control frame integrity group temporal key CCIGTK from AP 104 during a handshake operation prior to transmission of SICF 1000 by AP 104. STA 106 may receive the SICF 1000 transmitted by AP 104 and may use dedicated control frame integrity group temporal key CCIGTK to integrity check SICF 1000. STA 106 may, for example, use the dedicated control frame integrity group temporal key CCIGTK stored in STA group key table 1102 as the selected cryptographic key 604 provided to cryptographic function 608 (FIG. 7), which outputs the common control message integrity check CCMIC (e.g., as candidate CMIC 704 of FIG. 7). STA 106 may then compare its generated common control message integrity check CCMIC to the common control message integrity check CCMIC received in SICF 1000 to verify that SICF was transmitted by the expected AP 104. Generating common control message integrity check CCMIC using dedicated control frame integrity group temporal key CCIGTK may provide the same level of security robustness to all STAs regardless of their associated BSSID but may require additional storage at the AP and the STAs to store dedicated control frame integrity group temporal key CCIGTK.

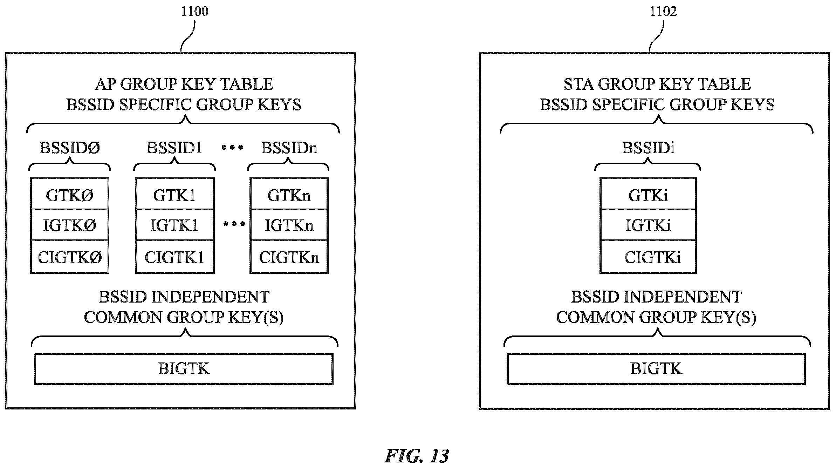

As another example, shown in FIG. 13, AP 104 may re-use the beacon integrity group temporal key (BIGTK) stored on AP group key table 1100 to generate the common control message integrity check CCMIC of SICF 1000. This may serve to minimize storage required at AP 104 and STAs 106, because the AP and the STAs do not need to store any additional cryptographic keys for integrity protecting and checking SICF 1000.

AP 104 may, for example, use the BIGTK as the selected cryptographic key 604 provided to cryptographic function 608 (FIG. 6), which outputs the common control message integrity check CCMIC (e.g., as CMIC 610 of FIG. 6). AP 104 may then insert the CCMIC into a field of SICF 1000 and may transmit SICF 1000 to STA 106 (e.g., as integrity-protected ICF 612 of FIG. 6). STA 106 may use the BIGTK stored in STA group key table 1102 as the selected cryptographic key 604 provided to cryptographic function 608 (FIG. 7), which outputs the common control message integrity check CCMIC (e.g., as candidate CMIC 704 of FIG. 7). STA 106 may then compare its generated common control message integrity check CCMIC to the common control message integrity check CCMIC received in SICF 1000 to verify that SICF was transmitted by the expected AP 104. Generating common control message integrity check CCMIC using the BIGTK may provide the same level of security robustness to all STAs regardless of their associated BSSID and may minimize storage required at AP group table 1100 and STA group key table 1102. The STAs may, however, exhibit vulnerability to inside attacks from STAs that have knowledge of the BIGTK but that are connected to a less robust network (BSSID) such as a guest network of the AP.

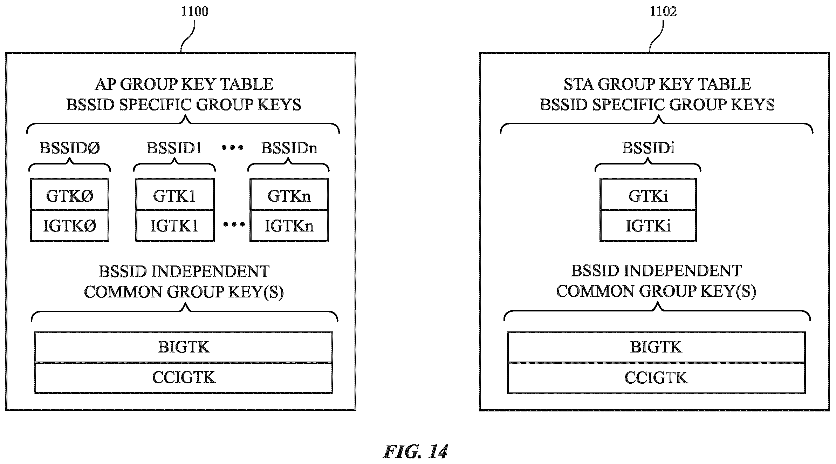

As another example, shown in FIG. 14, AP 104 and STAs 106 across all of the BSSIDs of AP 104 may use dedicated control frame integrity group temporal key CCIGTK to integrity protect and integrity check both SICF 1000 addressed to all STAs across BSSIDs (e.g., having an RA = "BROADCAST") as well as to integrity protect and check control frames (e.g., ICFs) transmitted to STAs of a single BSSID (e.g., having an RA = BSSIDi). This may allow control frame integrity group temporal keys CCIGTK (FIGS. 11-13) to be omitted from the BSSID-specific group keys in AP group key table 1100 and STA group key table 1102. This may serve to minimize the amount of storage consumed by AP group table 1100 and STA group key table 1102 but may offer less robust security than maintaining separate control frame integrity group temporal keys CCIGTK for each BSSID of AP 104.

In the examples of FIGS. 10-14, SICF 1000 is transmitted to STAs 106 associated with all of the BSSIDs of AP 104 (e.g., RA = "BROADCAST"). If desired, SICF 1000 may instead be transmitted to the STAs 106 associated with a subset (e.g., some but not all) of the BSSIDs of AP 104. A set of BSS's within multiple BSSIDs can either have the same common control frame integrity group key, no common control frame integrity group key, or no BIGTK. As one example, AP 104 may support a set of opportunistic wireless encryption (OWE) BSS's that do not authenticate STAs but that setup encryption keys for the BSS. A common CIGTK may not be shared to STAs in OWE because the common CIGTK could allow attacks with valid integrity checksums. STAs associated to the OWE BSS in the M-BSSID beacon frame are not shared in BIGTK for the same reason. Similarly, if BSS security mode is not capable of beacon protection or control frame integrity protection, then no BIGTK or common CIGTK is provided for the STAs. Under this type of implementation, different security level networks may be included in the same M-BSSID beacon frame.

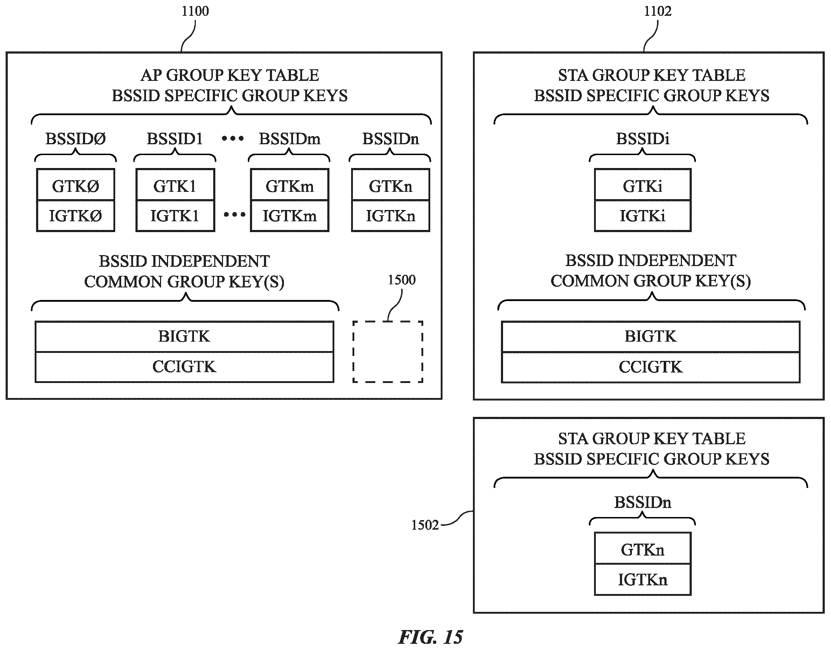

FIG. 15 illustrates one example in which AP 104 associates with STAs 106 of a first set of BSSIDs that supports robust security capabilities (e.g., from BSSID1 to BSSIDm) and a second set of BSSIDs (e.g., BSSIDn) that forms an OWE network. STA group key table 1102 may be stored on a STA 106 associated with a BSSIDi in the first set. There may also be a STA group key table 1502 stored on a STA 106 of the second set and associated with BSSIDn (the OWE network). In this example, when SICF 1000 (FIG. 10) is addressed to STAs associated with BSSID1 through BSSIDm, SICF 1000 may include a CMIC generated using the dedicated control frame integrity group temporal key CCIGTK stored at AP group key table 11000 and verified using the dedicated control frame integrity group temporal key CCIGTK stored at STA group key table 1102. The STA 106 associated with the OWE (BSSIDn) does not store the dedicated control frame integrity group temporal key CCIGTK and AP group key table 1100 does not use a BSSID-independent common group key for BSSIDn (as shown by empty region 1500).

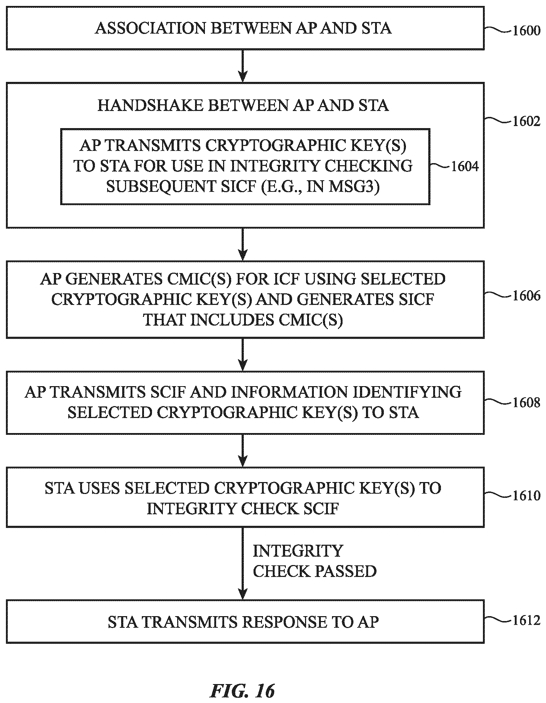

FIG. 16 is a flow chart of illustrative operations involved in performing wireless communications between a STA 106 and an AP 104 that is configured under a M-BSSID scheme. At operation 1600, STA 106 may register to and associate with a corresponding non-transmitted BSSIDi of AP 104 (e.g., BSSID1, BSSID2, etc.). Some or all of operation 1602 may be performed concurrent with operation 1600 if desired.

At operation 1602, AP 104 may perform a handshake operation with STA 106. If desired, AP 104 may transmit a set of cryptographic group keys to STA 106 during the handshake operation (at operation 1604). The cryptographic group keys transmitted to STA 106 may include, for example, BSSID-independent common group keys such as the BIGTK stored at AP group key table 1100 (FIGS. 11-15) and/or the dedicated control frame integrity group temporal key CCIGTK stored at AP group key table 1100 (FIGS. 12, 14, and 15), the control frame integrity group temporal key CIGTKO for the transmitted BSSID0 of AP 104 (FIG. 11), the group temporal key GTK for the BSSIDi associated with STA 106 (FIGS. 11-14), the integrity group temporal key IGTKi for the BSSIDi associated with STA 106 (FIGS. 11-14), and/or the control frame integrity group temporal key CIGTKi for the BSSIDi associated with STA 106 (FIGS. 11-13). STA 106 may store the received cryptographic group keys at its STA group key table 1102 (FIGS. 11-15) for use in subsequent communications.

At operation 1606, in implementations where AP 104 uses a respective CMIC for each BSSIDi supported by the AP to integrity protect the transmitted SICF (e.g., SICF 906 of FIG. 9), AP 104 may generate a respective CMIC for each BSSIDi supported by the AP. AP 104 may, for example, generate the CMIC for each BSSIDi using the respective control frame integrity group temporal key CIGTKi (FIGS. 11-13) associated with that BSSIDi (e.g., using control frame integrity group temporal key CIGTK1 as the selected cryptographic key 604 of FIG. 6 to generate a CMIC1 for BSSID1, using control frame integrity group temporal key CIGTK2 as the selected cryptographic key 604 of FIG. 6 to generate a CMIC2 for BSSID2, etc.).

In implementations where AP 104 uses a common control message integrity check CCMIC for all BSSIDi's supported by the AP to integrity protect the transmitted SICF (e.g., SICF 1000 of FIG. 10), AP 104 may, for example, generate common control message integrity check CCMIC using dedicated control frame integrity group temporal key CCIGTK (FIGS. 12, 14, and 15) (e.g., using control frame integrity group temporal key CCIGTK as the selected cryptographic key 604 of FIG. 6 to generate common control message integrity check CCMIC at cryptographic function 608) or may generate common control message integrity check CCMIC using dedicated the BIGTK (FIG. 13) for AP 104 (e.g., using the BIGTK as the selected cryptographic key 604 of FIG. 6 to generate common control message integrity check CCMIC at cryptographic function 608).

AP 104 may insert the CMIC(s) generated at operation 1606 into an ICF (e.g., a MU-RTS frame, a trigger frame, etc.) to be transmitted to STA 106, producing a corresponding SICF (e.g., SICF 906 of FIG. 9 or SICF 1000 of FIG. 10). AP 104 may also insert information (e.g., one or more bits of one or more header fields of the SICF) into the SICF that identifies or indicates the selected cryptographic group key(s) used by AP 104 to generate the CMIC(s) in the SICF. At operation 1608, AP 104 may transmit the SICF, including the generated CMIC(s) and the information identifying the selected cryptographic group key(s), to STA 106.

At operation 1610, STA 106 receives the SICF. STA 106 may use the selected cryptographic group key(s) identified by the received SICF to integrity check the SICF (e.g., using the procedure illustrated in FIG. 7). Integrity checking the SICF is sometimes also referred to herein as verifying or attempting to verify a CMIC of the SICF. For example, STA 106 may use dedicated control frame integrity group temporal key CCIGTK or the BIGTK as the selected cryptographic key 604 of FIG. 7 to generate a candidate common control message integrity check CCMIC and may compare the candidate common control message integrity check CCMIC to the common control message integrity check CCMIC included in the SICF. STA 106 may use BSSID-specific control frame integrity group temporal key CIGTK or the BSSID-independent control frame integrity group temporal key CCIGTK as the selected cryptographic key to generate a candidate common control message integrity check CCMIC and may compare the candidate common control message integrity check CCMIC to the common control message integrity check CCMIC included in the SICF. If/when the common control message integrity check CCMIC included in the SICF matches the candidate common control message integrity check CCMIC, STA 106 may pass the integrity check and processing may proceed to operation 1612. As another example, STA 106 may use the control frame integrity group temporal key CIGTKi for its associated BSSIDi to generate a candidate control message integrity check CMIC' and may compare the candidate control message integrity check CMIC' to the control message integrity check CMIC included in the SICF for its associated BSSIDi. If/when the control message integrity check CMIC included in the SICF for the BSSIDi of STA 106 matches the candidate control message integrity check CMIC', STA 106 may pass the integrity check and processing may proceed to operation 1612.

At operation 1612 (e.g., responsive to passage/verification of the integrity check), STA 106 may transmit a response to AP 104 (e.g., an ACK frame, a BA frame, a M-BA frame, etc.). If desired, STA 106 may integrity protect the response. AP 104 and STA 106 may subsequently convey data frames (e.g., data frames preceded or triggered by the SICF).

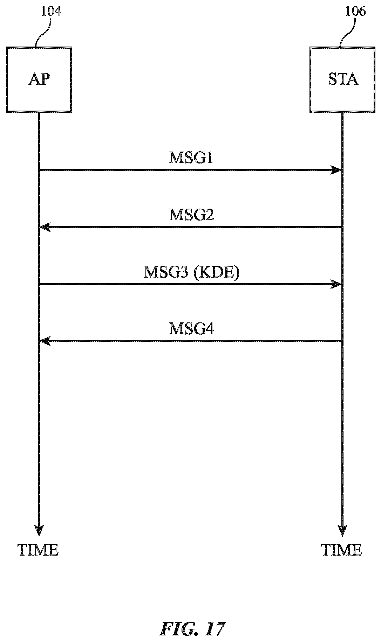

FIG. 17 is a timing diagram showing an illustrative handshake procedure between AP 104 and STA 106 (e.g., as performed at operation 1602 of FIG. 16). As shown in FIG. 17, the handshake procedure may include transmission of a first message (MSG1) from AP 104 to STA 106. STA 106 may then acknowledge or respond to receipt of MSG1 with the transmission of a second message (MSG2) from STA 106 to AP 104. AP 104 may then acknowledge or respond to receipt of MSG2 with the transmission of a third message (MSG3) from AP 104 to STA 106. STA 106 may then acknowledge or respond to receipt of MSG3 with the transmission of a fourth message (MSG4) from STA 106 to AP 104. This example is illustrative and non-limiting. The handshake procedure may include additional message transmissions or other handshake procedures may be used.

If desired, AP 104 may include a set of cryptographic group keys in MSG3 (e.g., at operation 1604 of FIG. 16). AP 104 may, for example, include the set of cryptographic group keys in one or more key data elements (KDEs) of MSG3. MSG3 may, for example, include a different respective KDE for each cryptographic group key transmitted to STA 106.

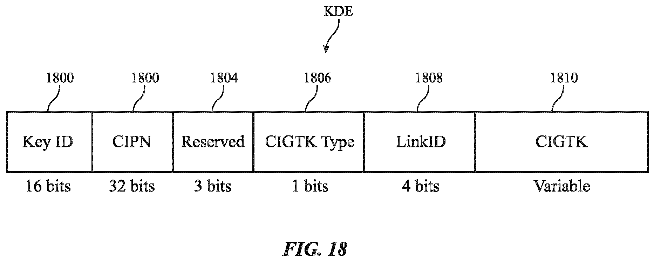

FIG. 18 is a diagram of an illustrative KDE that may be included in MSG3 for a corresponding cryptographic group key transmitted from AP 104 to STA 106 during handshake. As shown in FIG. 18, the KDE may include a key identifier (KeyID) field 1800, a CIPN field 1802, a reserved field 1804, a key type field 1806, a link identifier (LinkID) field 1808, and a key data field 1810. Key data field 1810 may include the cryptographic group key being transmitted to STA 106. KeyID field 1800 may identify the cryptographic group key included in key data field 1810. CIPN field 1802 is the packet number associated with the CIGTK. Key type field 1806 indicates whether the cryptographic group key included in key data field 1810 is a BSSID-specific cryptographic group key (e.g., CIGTKi) or whether the cryptographic group key included in key data field 1810 is a BSSID-independent common group key shared by all BSSIDs (e.g., CCIGTK or BIGTK). The example of FIG. 18 is illustrative and, in general, other container structures may be used to inform STA 106 of one or more cryptographic group keys.

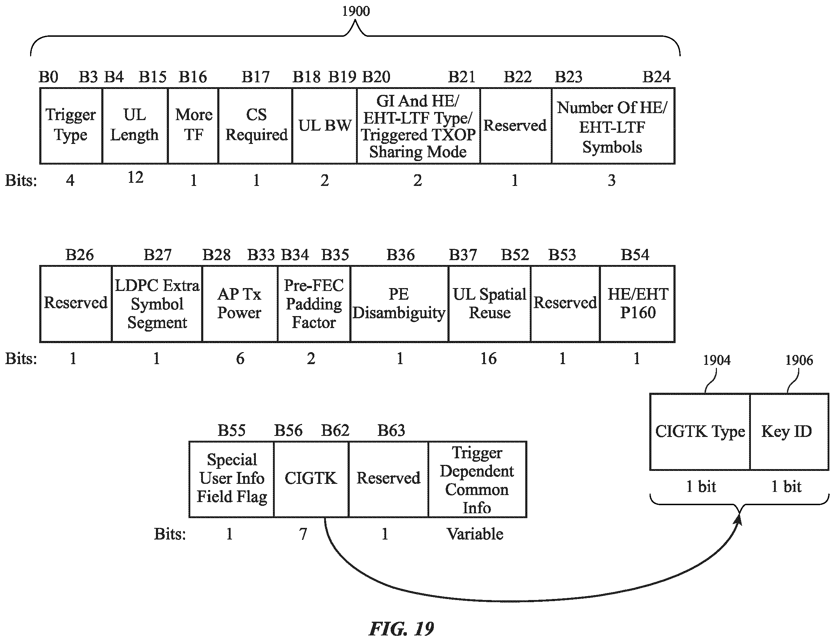

FIG. 19 is a diagram showing one example of how AP 104 may include information identifying/indicating the selected cryptographic group key in the SICF transmitted to STA 106 (e.g., at operation 1608 of FIG. 19). This information may serve to inform STA 106 of which of its stored cryptographic group keys are to be used to verify the integrity of the SICF. This information may sometimes also be referred to as a KDE selector or KDE selector information.

As shown in FIG. 19, the SICF may include header fields 1900. The header fields 1900 may include a key or KDE identifier/selector field such as field 1902. Field 1902 may include a key type field 1904 and a key identifier field 1906. Key type field 1904 and key identifier field 1906 may collectively identify which of the stored cryptographic group keys STA 106 is to use to verify the integrity of the SICF. Key type field 1904 and key identifier field 1906 may be relatively small (e.g., may each be single-bit fields that each include only a single bit) to minimize overhead for the SICF.

For example, key type field 1904 may have a value of "1" when the selected cryptographic group key is a BSSID-specific key (e.g., when the selected cryptographic group key is the control frame integrity group temporal key CIGTKi for the BSSIDi of the STA) and may have a value of "0" when the selected cryptographic group key is shared by more than one BSSID of the AP (e.g., when the selected cryptographic group key is dedicated control frame integrity group temporal key CCIGTK or the BIGTK). Key identifier field 1906 may, for example, be used to resolve the ambiguity within the same key type of key type field 1904, which identifies the selected cryptographic group key (e.g., may have a value of "1" when a first cryptographic group key is used for the dedicated control frame integrity group temporal key CCIGTK and may have a value of "0" when a second cryptographic group key is used for the dedicated control frame integrity group temporal key CCIGTK). Other frame structures and reporting mechanisms may be used to inform STAs 106 of the selected cryptographic group key(s).

As used herein, the term "concurrent" means at least partially overlapping in time. In other words, first and second events are referred to herein as being "concurrent" with each other if at least some of the first event occurs at the same time as at least some of the second event (e.g., if at least some of the first event occurs during, while, or when at least some of the second event occurs). First and second events can be concurrent if the first and second events are simultaneous (e.g., if the entire duration of the first event overlaps the entire duration of the second event in time) but can also be concurrent if the first and second events are non-simultaneous (e.g., if the first event starts before or after the start of the second event, if the first event ends before or after the end of the second event, or if the first and second events are partially non-overlapping in time). As used herein, the term "while" is synonymous with "concurrent." The term "when" also implies at least some concurrency (e.g., event A occurring "when" event B occurs means that at least some of event A is concurrent with at least some of event B).

STAs 106 and APs 102/104 (FIG. 1) may gather and/or use personally identifiable information. It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

The methods and operations described above in connection with FIGS. 1-19 may be performed by the components of a STA and/or AP using software, firmware, and/or hardware (e.g., dedicated circuitry or hardware). Software code for performing these operations may be stored on non-transitory computer readable storage media (e.g., tangible computer readable storage media) stored on one or more of the components of the STA and/or AP. The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of the STA and/or AP. The processing circuitry may include microprocessors, central processing units (CPUs), application-specific integrated circuits with processing circuitry, or other processing circuitry.

For one or more aspects, at least one of the components set forth in one or more of the preceding figures may be configured to perform one or more operations, techniques, processes, or methods as set forth in the example section below. For example, circuitry associated with an electronic device, authentication server, one or more processors, etc. as described above in connection with one or more of the preceding figures may be configured to operate in accordance with one or more of the examples set forth below in the example section.

### Examples

In the following sections, further exemplary aspects are provided.

Example 1 includes a method of operating a station (STA) to communicate with an access point (AP), the method comprising: receiving, from the AP, a control frame that includes a control message integrity check (CMIC) shared by a plurality of basic service set identifiers (BSSIDs) of the AP; attempting to verify, using one or more processors, the CMIC in the control frame; and transmitting, using one or more antennas, an uplink signal to the AP responsive to verifying the CMIC in the control frame.

Example 2 includes the method of example 1 or some other example or combination of examples herein, wherein the control frame comprises: a receiver address (RA) field that includes a broadcast address; and a transmitter address (TA) field that identifies a BSSID of the AP that is not associated with any STAs served by the AP.

Example 3 includes the method of any of examples 1 or 2 or some other example or combination of examples herein, wherein the control frame comprises a multi-user request to send (MU-RTS) frame and the uplink signal comprises a Clear to Send (CTS) frame having an additional RA field that includes the BSSID of the AP that is not associated with any STAs served by the AP.

Example 4 includes the method of any of examples 1-3 or some other example or combination of examples herein, wherein the control frame comprises a trigger frame and the uplink signal comprises a trigger-based physical protocol data unit (TB PPDU) frame.

Example 5 includes the method of any of examples 1-4 or some other example or combination of examples herein, wherein attempting to verify the CMIC comprises attempting to verify the CMIC based on a cryptographic group key received from the AP.

Example 6 includes the method of any of examples 1-5 or some other example or combination of examples herein, wherein the cryptographic group key comprises a BSSID-specific control frame integrity group temporal key (CIGTK) associated with a dedicated BSSID of the AP and wherein the dedicated BSSID is not associated with any STAs served by the AP.

Example 7 includes the method of any of examples 1-6 or some other example or combination of examples herein, wherein the cryptographic group key comprises a BSSID-independent control frame integrity group temporal key (CIGTK) shared by the plurality of BSSIDs of the AP.

Example 8 includes the method of any of examples 1-7 or some other example or combination of examples herein, wherein the cryptographic group key comprises a beacon integrity group temporal key (BIGTK) that is used by the AP to integrity protect beacon frames transmitted by the AP.

Example 9 includes the method of any of examples 1-8 or some other example or combination of examples herein, further comprising: receiving a key data element (KDE) in a third message of a handshake procedure between the STA and the AP, wherein the KDE identifies the cryptographic group key.

Example 10 includes the method of any of examples 1-9 or some other example or combination of examples herein, wherein the control frame comprises one or more header fields that identify the cryptographic group key.

Example 11 includes the method of any of examples 1-10 or some other example or combination of examples herein, wherein the one or more header fields comprise a single-bit key type field and a single-bit key identifier field.

Example 12 includes an electronic device configured to communicate with an access point (AP), the electronic device comprising: a receiver configured to receive, from the AP, a control frame that includes a first control message integrity check (CMIC) for a first basic service set identifier (BSSID) of the AP and that includes a second CMIC for a second BSSID of the AP, the electronic device being associated with the first BSSID but not the second BSSID; one or more processors configured to attempt to verify the first CMIC in the control frame; and a transmitter configured to transmit an uplink signal to the AP responsive to verifying the first CMIC in the control frame.

Example 13 includes the method of example 12 or some other example or combination of examples herein, the one or more processors being configured to attempt to verify the first CMIC in the control frame by: generating a candidate CMIC based on a control frame integrity group temporal key (CIGTK) associated with the first BSSID; and comparing the candidate CMIC to the first CMIC in the control frame.

Example 14 includes the method of any of examples 12, 13, or some other example or combination of examples herein, wherein the control frame comprises a multi-user request to send (MU-RTS) frame and the uplink signal comprises a Clear to Send (CTS) frame having a receiver address field that includes a third BSSID of the AP that is different from the first BSSID and the second BSSID.

Example 15 includes the method of any of examples 12-14 or some other example or combination of examples herein, wherein the control frame comprises a trigger frame and the uplink signal comprises a trigger-based physical protocol data unit (TB PPDU) frame.

Example 16 includes a method of operating an access point (AP) according to a communications protocol that implements a multiple basic service set identifier (M-BSSID) scheme, the method comprising: generating, using one or more processors, a control message integrity check (CMIC) based on a cryptographic key; and transmitting, using one or more antennas, a control frame to a first station (STA) associated with a first basic service set identifier (BSSID) of the AP and to a second STA associated with a second BSSID of the AP that is different from the first BSSID, wherein a header of the control frame includes the CMIC and a transmitter address (TA), and the TA identifies a third BSSID that is different from the first BSSID and the second BSSID.

Example 17 includes the method of example 16 or some other example or combination of examples herein, wherein the cryptographic key comprises a BSSID-specific control frame integrity group temporal key (CIGTK) associated with the third BSSID.

Example 18 includes the method of any of examples 16, 17, or some other example or combination of examples herein, wherein the cryptographic key comprises a BSSID-independent control frame integrity group temporal key that is shared by the first BSSID and the second BSSID.

Example 19 includes the method of any of examples 16-18 or some other example or combination of examples herein, wherein the cryptographic key comprises a beacon integrity group temporal key (BIGTK).

Example 20 includes the method of any of examples 16-19 or some other example or combination of examples herein, wherein the cryptographic key comprises a BSSID-specific control frame integrity group temporal key (CIGTK) associated with the first BSSID, the method further comprising: generating, using the one or more processors, an additional CMIC based on an additional CIGTK associated with the second BSSID, wherein the header of the control frame includes the additional CMIC.

Example 21 may include an apparatus comprising means to perform one or more elements of a method described in or related to any of examples 1-20 or any combination thereof, or any other method or process described herein.

Example 22 may include one or more non-transitory computer-readable media comprising instructions to cause an electronic device, upon execution of the instructions by one or more processors of the electronic device, to perform one or more elements of a method described in or related to any of examples 1-20 or any combination thereof, or any other method or process described herein.

Example 23 may include an apparatus comprising logic, modules, or circuitry to perform one or more elements of a method described in or related to any of examples 1-20 or any combination thereof, or any other method or process described herein.

Example 24 may include a method, technique, or process as described in or related to any of examples 1-20 or any combination thereof, or portions or parts thereof.

Example 25 may include an apparatus comprising: one or more processors and one or more non-transitory computer-readable storage media comprising instructions that, when executed by the one or more processors, cause the one or more processors to perform the method, techniques, or process as described in or related to any of examples 1-20, or any combination thereof, or portions thereof.

Example 26 may include a signal as described in or related to any of examples 1-20, or any combination thereof, or portions or parts thereof.

Example 27 may include a datagram, information element, packet, frame, segment, PDU, or message as described in or related to any of examples 1-20, or any combination thereof, or portions or parts thereof, or otherwise described in the present disclosure.

Example 28 may include a signal encoded with data as described in or related to any of examples 1-20, or any combination thereof, or portions or parts thereof, or otherwise described in the present disclosure.

Example 29 may include a signal encoded with a datagram, IE, packet, frame, segment, PDU, or message as described in or related to any of examples 1-20, or any combination thereof, or portions or parts thereof, or otherwise described in the present disclosure.

Example 30 may include an electromagnetic signal carrying computer-readable instructions, wherein execution of the computer-readable instructions by one or more processors is to cause the one or more processors to perform the method, techniques, or process as described in or related to any of examples 1-20, or any combination thereof, or portions thereof.

Example 31 may include a computer program comprising instructions, wherein execution of the program by a processing element is to cause the processing element to carry out the method, techniques, or process as described in or related to any of examples 1-20, or any combination thereof, or portions thereof.

Example 32 may include a signal in a wireless network as shown and described herein.

Example 33 may include a method of communicating in a wireless network as shown and described herein.

Example 34 may include a system for providing wireless communication as shown and described herein.

Example 35 may include a device for providing wireless communication as shown and described herein.

In accordance with an embodiment, a method of operating a station (STA) to communicate with an access point (AP) is provided, the method includes receiving, from the AP, a control frame that includes a control message integrity check (CMIC) shared by a plurality of basic service set identifiers (BSSIDs) of the AP, attempting to verify, by the STA, the CMIC in the control frame, and transmitting, by the STA, an uplink signal to the AP responsive to verifying the CMIC in the control frame.

In accordance with another embodiment, the control frame optionally includes a receiver address (RA) field including a broadcast address, and a transmitter address (TA) field that optionally indicates a transmitted BSSID of the AP that is used for management signaling of multiple BSSIDs.

In accordance with another embodiment, the control frame optionally includes a multi-user request to send (MU-RTS) frame and the uplink signal optionally includes a Clear to Send (CTS) frame having an additional RA field having the transmitted BSSID of the AP that is not associated with any STAs served by the AP.

In accordance with another embodiment, the control frame optionally includes a trigger frame and the uplink signal optionally includes a trigger-based physical protocol data unit (TB PPDU) frame.

In accordance with another embodiment, attempting to verify the CMIC optionally includes attempting to verify the CMIC based on a cryptographic group key received from the AP.

In accordance with another embodiment, the cryptographic group key optionally includes a BSSID-specific control frame integrity group temporal key (CIGTK) associated with a dedicated BSSID of the AP.

In accordance with another embodiment, the cryptographic group key optionally includes a BSSID-independent control frame integrity group temporal key (CIGTK) shared by at least two BSSIDs of the AP.

In accordance with another embodiment, the cryptographic group key optionally includes a beacon integrity group temporal key (BIGTK) that serves to integrity protect beacon frames transmitted by the AP.

In accordance with another embodiment, the method optionally includes receiving a key data element (KDE) in a third message of a handshake procedure between the STA and the AP, where the KDE indicates the cryptographic group key.

In accordance with another embodiment, the control frame optionally includes one or more header fields that indicate the cryptographic group key.

In accordance with another embodiment, the one or more header fields optionally include a single-bit key type field and a single-bit key identifier field.

In accordance with an embodiment, an electronic device configured to communicate with an access point (AP) is provided, the electronic device includes a receiver configured to receive, from the AP, a control frame that includes a first control message integrity check (CMIC) for a first basic service set identifier (BSSID) of the AP and that includes a second CMIC for a second BSSID of the AP, the electronic device being associated with the first BSSID but not the second BSSID; one or more processors configured to attempt to verify the first CMIC in the control frame, and a transmitter configured to transmit an uplink signal to the AP when the first CMIC in the control frame has been successfully verified.

In accordance with another embodiment, the one or more processors optionally being configured to attempt to verify the first CMIC in the control frame by generating a candidate CMIC based on a control frame integrity group temporal key (CIGTK) associated with the first BSSID, and comparing the candidate CMIC to the first CMIC in the control frame.

In accordance with another embodiment, the control frame optionally includes a multi-user request to send (MU-RTS) frame and the uplink signal comprises a Clear to Send (CTS) frame having a receiver address field that includes a third BSSID of the AP that is different from the first BSSID and the second BSSID.

In accordance with another embodiment, the control frame optionally includes a trigger frame and the uplink signal optionally includes a trigger-based physical protocol data unit (TB PPDU) frame.

In accordance with an embodiment, a method of operating an access point (AP) according to a communications protocol that implements a multiple basic service set identifier (M-BSSID) scheme is provided, the method includes generating, by the AP, a control message integrity check (CMIC) based on a cryptographic key, and transmitting a control frame, by the AP, to a first station (STA) associated with a first basic service set identifier (BSSID) of the AP and to a second STA associated with a second BSSID of the AP that is different from the first BSSID, where a header of the control frame includes the CMIC and a transmitter address (TA), and the TA indicates a third BSSID that is different from the first BSSID and the second BSSID.

In accordance with another embodiment, the cryptographic key optionally includes a BSSID-specific control frame integrity group temporal key (CIGTK) associated with the third BSSID.

In accordance with another embodiment, the cryptographic key optionally includes a BSSID-independent control frame integrity group temporal key that is shared by the first BSSID and the second BSSID.

In accordance with another embodiment, the cryptographic key optionally includes a beacon integrity group temporal key (BIGTK).

In accordance with another embodiment, the cryptographic key optionally includes a BSSID-specific control frame integrity group temporal key (CIGTK) associated with the first BSSID, the method optionally includes generating, using the one or more processors, an additional CMIC based on an additional CIGTK associated with the second BSSID, where the header of the control frame includes the additional CMIC.

Any of the above-described examples may be combined with any other example (or combination of examples), unless explicitly stated otherwise. The foregoing description of one or more implementations provides illustration and description but is not intended to be exhaustive or to limit the scope of aspects to the precise form disclosed.

## Claims

1. A method of operating a station, STA, to communicate with an access point, AP, the method comprising:
receiving, from the AP, a control frame that includes a control message integrity check, CMIC, shared by a plurality of basic service set identifiers, BSSIDs, of the AP;
attempting to verify, by the STA, the CMIC in the control frame; and
transmitting, by the STA, an uplink signal to the AP responsive to verifying the CMIC in the control frame.

2. The method of claim 1, wherein the control frame comprises:
a receiver address, RA, field comprising a broadcast address; and
a transmitter address, TA, field that indicates a transmitted BSSID of the AP that is used for management signaling of multiple BSSIDs.

3. The method of claim 2, wherein the control frame comprises a multi-user request to send, MU-RTS, frame and the uplink signal comprises a Clear to Send, CTS, frame having an additional RA field having the transmitted BSSID of the AP that is not associated with any STA served by the AP.

4. The method of claim 2, wherein the control frame comprises a trigger frame and the uplink signal comprises a trigger-based physical protocol data unit, TB PPDU, frame.

5. The method of claim 1, wherein attempting to verify the CMIC comprises attempting to verify the CMIC based on a cryptographic group key received from the AP.

6. The method of claim 5, wherein the cryptographic group key comprises a BSSID-specific control frame integrity group temporal key, CIGTK, associated with a dedicated BSSID of the AP.

7. The method of claim 5, wherein the cryptographic group key comprises a BSSID-independent control frame integrity group temporal key, CIGTK, shared by at least two BSSIDs of the AP.

8. The method of claim 5, wherein the cryptographic group key comprises a beacon integrity group temporal key, BIGTK, that serves to integrity protect beacon frames transmitted by the AP.

9. The method of claim 5, further comprising:
receiving a key data element, KDE, in a third message of a handshake procedure between the STA and the AP, wherein the KDE indicates the cryptographic group key.

10. The method of claim 5, wherein the control frame comprises one or more header fields that indicate the cryptographic group key.

11. The method of claim 10, wherein the one or more header fields comprise a single-bit key type field and a single-bit key identifier field.

12. An electronic device configured to communicate with an access point, AP, the electronic device comprising:
a receiver configured to receive, from the AP, a control frame that includes a first control message integrity check, CMIC, for a first basic service set identifier, BSSID, of the AP and that includes a second CMIC for a second BSSID of the AP, the electronic device being associated with the first BSSID but not the second BSSID;
one or more processors configured to attempt to verify the first CMIC in the control frame; and
a transmitter configured to transmit an uplink signal to the AP when the first CMIC in the control frame has been successfully verified.

13. The electronic device of claim 12, the one or more processors being configured to attempt to verify the first CMIC in the control frame by:
generating a candidate CMIC based on a control frame integrity group temporal key, CIGTK, associated with the first BSSID; and
comparing the candidate CMIC to the first CMIC in the control frame.

14. The electronic device of claim 12, wherein the control frame comprises a multi-user request to send, MU-RTS, frame and the uplink signal comprises a Clear to Send, CTS, frame having a receiver address field that comprises a third BSSID of the AP that is different from the first BSSID and the second BSSID.

15. The electronic device of claim 12, wherein the control frame comprises a trigger frame and the uplink signal comprises a trigger-based physical protocol data unit, TB PPDU, frame.
